(19) 

Europäisches
Patentamt
European
Patent Office
Office européen
des brevets

(11) **EP 2 469 624 A1**

(12) **EUROPEAN PATENT APPLICATION**
published in accordance with Art. 153(4) EPC

(43) Date of publication:
**27.06.2012 Bulletin 2012/26**

(21) Application number: **10809985.4**

(22) Date of filing: **18.08.2010**

(51) Int Cl.:
**H01M 2/16** (2006.01)          **H01M 10/0566** (2010.01)

(86) International application number:
**PCT/JP2010/063941**

(87) International publication number:
**WO 2011/021644 (24.02.2011 Gazette 2011/08)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **19.08.2009 JP 2009190272**

(71) Applicants:
  • **Mitsubishi Chemical Corporation**
    **Tokyo 108-0014 (JP)**
  • **Mitsubishi Plastics, Inc.**
    **Tokyo 103-0021 (JP)**

(72) Inventors:
  • **Satoshi NAKASHIMA**
    **1000 Kamoshida-cho,**
    **Aoba-ku**
    **Yokohama-shi,Kanagawa**
    **227-8502 (JP)**
  • **Kanako TAKIGUCHI**
    **3-1,Chuo 8-chome,**
    **Ami-machi**
    **Inashiki-gun**
    **Ibaraki 300-0332 (JP)**
  • **Kenechi,ISHIGAKI**
    **1000,Kamoshida-cho,Aoba-ku**
    **Yokohama-shi,**
    **Kanagawa**
    **227-8502 (JP)**

(74) Representative: **Vossius & Partner**
    **Siebertstrasse 4**
    **81675 München (DE)**

(54) **SEPARATOR FOR NON-AQUEOUS ELECTROLYTE SECONDARY BATTERY AND NON-AQUEOUS ELECTROLYTE SECONDARY BATTERY**

(57) The invention relates to a separator for use in a nonaqueous-electrolyte secondary battery, and a non-aqueous-electrolyte secondary battery employing the separator, the separator comprising a positive electrode and a negative electrode which are capable of occluding and releasing lithium, a separator, and a nonaqueous electrolytic solution comprising a nonaqueous solvent and an electrolyte, the separator for use in the battery having an electroconductive layer, the electroconductive layer having (1) an apparent volume resistivity of $1\times10^4$ $\Omega\cdot$cm to $1\times10^6$ $\Omega\cdot$cm, or (2) a volume resistivity of $1\times10^{-6}$ $\Omega\cdot$cm to $1\times10^6$ $\Omega\cdot$cm, or (3) a surface electrical resistance of $1\times10^{-2}$ $\Omega$ to $1\times10^9$ $\Omega$, and the electroconductive layer having a film thickness less than 5 $\mu$m. The invention further relates to.

EP 2 469 624 A1

**Description**

Technical Field

The present invention relates to separators for nonaqueous-electrolyte secondary battery which make it possible to obtain nonaqueous-electrolyte secondary batteries that are safe even when overcharged, and also to a nonaqueous-electrolyte secondary battery which employs any of the separators for nonaqueous-electrolyte secondary battery.

Background Art

A lithium secondary battery is configured of: a positive electrode obtained by forming an active-material layer containing a positive-electrode active material, such as a lithium compound represented by lithium cobalt oxide, on a current collector; a negative electrode obtained by forming an active-material layer containing a negative-electrode active material, such as a carbon material capable of occluding and releasing lithium and represented by, for example, graphite, on a current collector; a nonaqueous electrolytic solution obtained by dissolving an electrolyte, e.g., a lithium salt such as $LiPF_6$, in an aprotic nonaqueous solvent; and a separator constituted of a porous polymer film. This battery is characterized by having a high energy density and, despite this, being lightweight.
With the recent trend toward weight reduction and size reduction in electrical products, lithium secondary batteries have come to be used in a wide range of fields including portable telephones, notebook type personal computers, and power tools so as to take advantage of those features of the batteries. Especially under the circumstances in which there is international growing concern about the recent issues of global warming, reductions in carbon dioxide emission which are to be attained by the introduction of electric vehicles (EVs) and hybrid electric vehicles (HEVs) are highly expected in the automobile industry. Lithium secondary batteries having a high capacity and a high output, which are key devices for these vehicles, are being developed enthusiastically.
Since lithium secondary batteries for use in EVs or HEVs are required to output a voltage as high as several hundred volts for driving motors, many single cells are serially connected to produce the necessary high voltage. For the convenience of assembly and management, the ordinary procedure includes serially connecting several to about ten single cells to produce a battery module and combining a plurality of such battery modules to construct a whole battery system. Since battery control, such as input and output, is usually conducted with respect to each battery module, a voltage of several tens of volts is applied to each battery module. However, in case where a battery module includes a defective cell, it is supposed that the voltage application results in a worst situation in which the voltage of several tens of volts for the whole battery module is applied to one single cell, which comes into an extreme overcharged state, and this leads to short-circuiting or explosion. Although the most effective measure in preventing such a situation is to separately monitor and control the single cells, this measure is impracticable from the standpoints of complicatedness of the control and cost. There is a strong desire for a material system which has resistance to an overcharged state.
With respect to measures against an overcharged state, techniques in which an overcharge inhibitor is added to an electrolytic solution have conventionally been used as shown in the Patent Document 1. In these techniques, a compound having an oxidation potential not lower than the upper-limit voltage of the battery is added as an overcharge inhibitor to the electrolytic solution. When the battery comes into an overcharged state, the compound oxidatively polymerizes to form a high-resistance coating film on the surface of the active material. The overcharging current is thereby inhibited from flowing, and the progress of overcharge is stopped. However, most of the compounds in use as overcharge inhibitors are electrochemically and chemically active substances because of the purpose of use thereof. There are cases where when an overcharge inhibitor is added in a large amount to an electrolytic solution, the overcharge inhibitor reacts even under ordinary battery use conditions. Namely, the overcharge inhibitors may be causative of an increase in battery resistance and a decrease in capacity, On the other hand, when an overcharge inhibitor is added in a reduced amount, the quantity of current capable of being consumed during overcharge is reduced, making it difficult to produce a sufficient effect in lithium secondary batteries for EVs or EVs, in which current flows in large quantities.
Meanwhile, separately from such measures against battery overcharge, attempts are being made to prevent short-circuiting of a lithium ion battery by imparting electrical conductivity to the separator. Examples of such techniques include the techniques disclosed in the Patent Documents 2 to 5. Furthermore, the Patent Documents 6 and 7 disclose a technique in which electrical conductivity is imparted to a separator to thereby improve cycle characteristics. The Patent Document 8 discloses a technique in which an acrylic pressure-sensitive adhesive containing graphite or the like dispersed therein is applied to a separator to thereby enhance adhesion to electrodes and prevent a sheet shifting in a roll. The Patent Document 9 discloses a technique in which metal particles are applied to a separator to cause the metal particles to adsorb the gas which is evolved upon overcharge, thereby heightening safety.
The Patent Document 2 discloses a technique in which an antistatic agent is incorporated into or applied or sprayed on the surface of a separator to thereby impart antistatic properties to the separator and prevent electroconductive fine particles such as active materials from electrostatically adhering to the separator in a battery production step, thereby preventing the short-circuiting caused by penetration of fine particles.

The Patent Document 3 discloses a technique in which a layer of an alkali metal powder constituted af Li, Na, or K is formed on a separator surface to improve irreversibility.

The Patent Document 4 discloses a separator obtained by stretching a resin composition including a thermoplastic resin and an electroconductive filler.

The Patent Document 5 discloses a multilayered porous film having an electroconductive layer containing electroconductive particles and an electrically insulating layer containing non-electroconductive particles, as one technique for heightening the thickness-direction thermal conductivity of a separator.

The Patent Document 6 discloses a separator which has a surface to which electrical conductivity has been imparted and in which, when the positive-electrode conductor (current collector) has deteriorated in conducting performance, the electroconductive layer on the separator surface functions as a positive-electrode conductor (current collector). The separator disclosed hence has the function of prolonging the cycle life of the battery.

The Patent Document 7 discloses a technique in which an active material is applied on an electroconductive coating film formed on a separator surface and the separator is integrated with an electrode. The electrode is thereby configured so as to be thin and have an increased area in which the electrode faces the counter electrode, thereby attaining a reduction in current density and a reduction in the rate of consumption of the negative electrode and improving cycle life.

The Patent Document 8 discloses a technique in which an acrylic pressure-sensitive adhesive containing graphite dispersed therein is applied to the surfaces of a separator to enhance adhesion to electrodes and thereby prevent a sheet shifting in a roll.

The Patent Document 9 discloses a technique in which use is made of a separator in which the surface that is to face a positive electrode has been coated with Ti, Al, Sn, Bi, Cu, Si, Ga, W, Zr, B, Mo, or the like, thereby causing the separator to absorb oxygen gas evolved when the battery is in an overcharged state and inhibiting the battery from firing or exploding.

Prior-Art Documents

Patent Documents

Patent Document 1: JP-A-2003-297423
Patent Document 2: JP-A-10-154499
Patent Document 3: JP-A-2005-317551
Patent Document 4: Japanese Patent No. 4145087
Patent Document 5: JP-A-2006-269358
Patent Document 6: JP-A-2008-84866
Patent Document 7: JP-A-5-21069
Patent Document 8: JP-A-11-213980
Patent Document 9: JP-A-11-16566

Non-Patent Document

Non-Patent Document 1: Richiumu Ion Niji Denchi (2nd ed.), published by The Nikkan Kogyo Shimbun, Ltd., January 27, 2000, p.174

Summary of the Invention

Problems that the Invention is to Solve

However, with respect to the technique disclosed in the Patent Document 2, antistatic agents generally are used for the prevention of static buildup on the basis of adsorption of moisture present in the air and utilization of the resultant liberated ions. It has hence been impossible to produce the effect of such antistatic agents in nonaqueous-electrolyte secondary batteries, in which moisture has been basically excluded. Namely, even when the separator obtained by that technique is used in a nonaqueous-electrolyte secondary battery, this separator does not function as a separator having surface electrical conductivity.

With respect to the technique disclosed in the Patent Document 3, alkali metals are highly reactive metals and readily react with the oxygen or moisture present in the air, as is well known. Consequently, to form a layer of a powder of such a metal on a separator surface poses a serious problem concerning safety.
In the Patent Document 3 also, a problem concerning safety is pointed out, and coating of the alkali metal with a polymer is, for example, shown as a means for overcoming the problem. However, since coating with a polymer reduces the electrical conductivity of the metal, a separator having surface electrical conductivity cannot be formed.

The technique disclosed in the Patent Document 4 is as follows. Under ordinary battery use conditions, the distance between the electroconductive filler in the separator is sufficiently long and, hence, the separator is electrically non-electroconductive, When an abnormality such as, for example, internal short-circuiting, has occurred, the separator thermally shrinks and the electroconductive filler come into contact with one another to form electroconductive paths (shutdown effect), thereby rapidly discharging the residual capacity of the battery to render the battery safe. Namely, at the time of normal use of the battery, the whole separator disclosed in the Patent Document 4, not to mention the surface thereof, does not have electrical conductivity.

In the Patent Document 5, it is necessary that those particles should form percolation with one another for heightening the thermal conductivity of the separator. Although the necessity of adding the filler in a large amount for that purpose is described in the Patent Document 5, polymer films containing a large amount of a filler generally tend to have reduced flexibility and be brittle. Meanwhile, as is well known, the active materials, in particular, the negative-electrode active material, of a nonaqueous-electrolyte secondary battery increase in volume upon lithium occlusion and, hence, the separator is under high pressure. Especially in an overcharged state, the expansion of the active materials is accelerated further and a higher pressure is applied to the separator than in the normal state of battery use. Consequently, the separator disclosed in the Patent Document 5, which is low in strength and brittle, has a drawback that it is highly probable that the battery in an overcharged state suffers internal short-circuiting. The Patent Document 5 includes a statement to the effect that the thickness of the electroconductive layer preferably is at least 2/3 the overall thickness of the separator. However, there are cases where an electroconductive layer having a large thickness functions as a current collector. There is hence a drawback that a high charging/discharging current flows through the separator surface and the resultant Joule's heat accelerates thermal deterioration of the separator.

That an electroconductive layer on a separator surface functions as a positive-electrode conductor (current collector) as disclosed in the Patent Document 6 means that a high charging/discharging current is flowing through the separator surface even in the normal state of battery use. There is hence a drawback that thermal deterioration of the separator proceeds under the influence of the resultant Joule's heat.

Meanwhile, in the case where an electroconductive coating film is formed on one surface of a separator to form a current collector and a paste containing mainly of an active material is applied thereon, as disclosed in the Patent Document 7, there is a problem that since the solvent of the paste infiltrates into the separator, the binder resin dissolved in the solvent also infiltrate into the separator to fill micropores of the separator and thereby reduce battery performance. In the case where a sheet of nonwoven fabric or woven fabric is used as a base in place of the microporous film, there is a fear that the active material also may infiltrate into the base and penetrate in the thickness direction. There also is a drawback that since the electroconductive coating film functions as a current collector, a high charging/discharging current flows through the separator surface and the resultant Joule's heat causes thermal deterioration of the separator to proceed. Usually, an electrode is produced by coating of slurry, drying, and subsequent compression with a roller press, which is conducted for the purposes of thickness leveling, surface smoothing, and prevention of peeling from the current collector, as shown in the Non-Patent Document 1. However, the structure obtained by integrating a separator with an electrode which is disclosed in the Patent Document 7 has a problem that it is difficult to press the structure because the pressing may arouse a trouble, such as, for example, a separator deformation, destruction of micropores, or piercing of the separator by the active material, and use of that structure results in a decrease in yield, as shown in the Non-Patent Document 1. Furthermore, the lithium-transition metal composite oxide used as a positive-electrode active material has high electrical resistance. Consequently, formation of a positive electrode using this lithium-transition metal composite oxide alone results in insufficient electrical conductivity. When the lithium-transition metal composite oxide is used as a positive-electrode active material, an electroconductive agent such as acetylene black, carbon black, or fine particles of natural graphite and artificial graphite is hence added to thereby ensure electrical conductivity. However, when pressing is omitted, there is a problem that electroconductive paths are not sufficiently formed, resulting in a decrease in battery performance.

With respect to the technique disclosed in the Patent Document 8, it is necessary that the adhesive layer should be formed in a thickness of 5 $\mu$m or more for attaining sufficient adhesive force. As in the techniques disclosed in other Patent Documents, this technique hence has a drawback that the adhesive layer functions as a current collector and a high charging/discharging current flows through the separator surface to cause thermal deterioration of the separator to proceed. In addition, there are cases where the adhesive layer having a thickness of 5 $\mu$m or more is causative of a decrease in gas permeability.

With respect to the technique disclosed in the Patent Document 9, it is necessary that for sufficiently absorbing the oxygen gas evolved from the positive electrode, the separator surface should be coated with a metal in substantially the same amount as the positive-electrode active material. There is a problem that since the oxidation reactions of metals generally are exothermic reactions, there is a strong fear that the separator may suffer thermal shrinkage, meltdown, etc. In the Patent Document 9, this problem is avoided by employing a relatively low charging rate of 1.5 to 2.5 C. The technique has been unable to sufficiently accommodate higher discharging rates. For the technique disclosed in the Patent Document 9, the thickness of the metallic coating layer is important when safety is taken into account, as described above. However, no statement thereon is given in the document and the technique has been insufficient in an improvement in battery safety,

The invention has been achieved in view of the circumstances of the related art described above. An object of the invention is to provide a separator for nonaqueous-electrolyte secondary batteries that makes it possible to obtain nonaqueous-electrolyte secondary batteries which are so safe that even when a battery module includes a defective cell and comes into an overcharged state in which a voltage of several tens of volts for the whole battery module is applied to one or a small number of single cells, this module can be prevented from short-circuiting or exploding. Another object is to provide a nonaqueous-electrolyte secondary battery which employs this separator for nonaqueous-electrolyte secondary batteries.

Means for Solving the Problems

The present inventors diligently made investigations in order to overcome the problems. As a result, the inventors have found that overcharge resistance can be greatly improved by forming a specific electroconductive layer on a separator. The invention has been thus completed.

Namely, essential points of the invention are as follows.

<1>

A separator for use in a nonaqueous-electrolyte secondary battery, comprising a positive electrode and a negative electrode which are capable of occluding and releasing lithium, a separator, and a nonaqueous electrolytic solution comprising a nonaqueous solvent and an electrolyte, the separator having an electroconductive layer, the electroconductive layer having an apparent volume resistivity of $1 \times 10^{-4}$ $\Omega \cdot$cm to $1 \times 10^{6}$ $\Omega \cdot$cm and a film thickness less than 5 $\mu$m.

<2>

A separator for use in a nonaqueous-electrolyte secondary battery, comprising a positive electrode and a negative electrode which are capable of occluding and releasing lithium, a separator, and a nonaqueous electrolytic solution comprising a nonaqueous solvent and an electrolyte, the separator having an electroconductive layer, the electroconductive layer having a volume resistivity of $1 \times 10^{-6}$ $\Omega \cdot$cm to $1 \times 10^{6}$ $\Omega \cdot$cm and a film thickness less than 5 $\mu$m.

<3>

A separator for use in a nonaqueous-electrolyte secondary battery, comprising a positive electrode and a negative electrode which are capable of occluding and releasing lithium, a separator, and a nonaqueous electrolytic solution comprising a nonaqueous solvent and an electrolyte, the separator having an electroconductive layer, the electroconductive layer having a surface electrical resistance of $1 \times 10^{-2}$ $\Omega$ to $1 \times 10^{9}$ $\Omega$ and a film thickness less than 5 $\mu$m.

<4>

The separator for a nonaqueous-electrolyte secondary battery according to any one of <1> to <3> above which has a meltdown temperature of 170°C or higher,

<5>

The separator for a nonaqueous-electrolyte secondary battery according to any one of <1> to <4> above which has a puncture strength of 250 g to 800 g.

<6>

The separator for a nonaqueous-electrolyte secondary battery according to any one of <1> to <5> above which has the electroconductive layer is formed on at least one of the surfaces of the separator.

<7>

The separator for a nonaqueous-electrolyte secondary battery according to any one of <1> to <6> above wherein the electroconductive layer comprises at least one of metallic element and carbonaceous material.

<8>

The separator for a nonaqueous-electrolyte secondary battery according to <7> above wherein the metallic element is at least one of member selected from the group consisting of aluminum, molybdenum, copper, and titanium.

<9>

The separator for a nonaqueous-electrolyte secondary battery according to <7> above wherein the carbonaceous material is at least one of member selected from the group consisting of graphites, carbon blacks, and fine particles of amorphous carbon.

<10>

The separator for a nonaqueous-electrolyte secondary battery according to any one of <1> to <9> above which has a heat-resistant layer, the heat-resistant layer comprising a resin which has a melting point or glass transition temperature of 170°C or higher.

<11>

The separator for a nonaqueous-electrolyte secondary battery according to <10> above wherein the heat-resistant layer contains an inorganic filler.

<12>

The separator for a nonaqueous-electrolyte secondary battery according to <10> or <11> above wherein the heat-resistant layer comprises at least one resin selected from the group consisting of polymethylpentene, polyamides, polyimides, and polyamide-imides.

<13>

The separator for a nonaqueous-electrolyte secondary battery according to <11> above wherein the inorganic filler is at least one of member selected from the group consisting of aluminum oxide, magnesium oxide, titanium oxide, and barium sulfate.

<14>

A nonaqueous-electrolyte secondary battery comprising a positive electrode and a negative electrode which are capable of occluding and releasing lithium, a separator, and a nonaqueous electrolytic solution comprising a nonaqueous solvent and an electrolyte, wherein the separator is the separator for a nonaqueous-electrolyte secondary battery according to any one of <1> to <13> above.

<15>

The nonaqueous-electrolyte secondary battery according to <14> above wherein the positive electrode contains a Ni-Mn-Co alloy.

<16>

The nonaqueous-electrolyte secondary battery according to <14> or <15> above wherein the nonaqueous electrolytic solution contains a fluorinated carbonate.

<17>

The nonaqueous-electrolyte secondary battery according to <16> above wherein the fluorinated carbonate is represented by the general formula $C=O(OR^1)(OR^2)$ (wherein $R^1$ and $R^2$ each are an alkyl group having one or two carbon atoms, and at least one of $R^1$ and/or $R^2$ has one or more fluorine atoms).

<18>

The nonaqueous-electrolyte secondary battery according to <16> above wherein the fluorinated carbonate is a fluorinated carbonate formed by replacing one or two of the hydrogen atoms contained as components in ethylene carbonate with at least one of a fluorine atom and a fluorinated alkyl group.

<19>

The nonaqueous-electrolyte secondary battery according to any one of <16> to <18> above wherein the content of the fluorinated carbonate is 20% or less in terms of proportion by volume in the electrolytic solution.

<20>

The nonaqueous-electrolyte secondary battery according to any one oaf <14> to <19> above wherein the electrolyte comprises $LiPF_6$ and the concentration thereof in the electrolytic solution is 0.5 mol/L to 2 mol/L.

<21>

The nonaqueous-electrolyte secondary battery according to any one of <14> to <20> above wherein the nonaqueous electrolytic solution further contains, as an auxiliary electrolyte, at least one of compound selected from the group consisting of lithium borates, lithium phosphates, lithium fluorophosphates, lithium carboxylates, lithium sulfonates, imide lithium salts, lithium oxalatoborates, lithium oxalatophosphates, and lithium methide salts, the concentration of all auxiliary electrolytes in the electrolytic solution being 0.01 mol/L to 0.3 mol/L.

<22>

The nonaqueous-electrolyte secondary battery according to <21> above wherein the auxiliary electrolyte is at least one of compound selected from the group consisting of lithium tetrafluoroborate, bis(fluorosulfonyl)imide, and lithium bis(trifluorosulfonyl)imide lithium.

<23>

A nonaqueous-electrolyte secondary-battery module which comprises five or more nonaqueous-electrolyte secondary batteries serially connected together, the batteries each being the nonaqueous-electrolyte secondary battery according to any one of <14> to <22> above, and in which a voltage of 20 V or higher is required for fully charging the module.

Effects of the Invention

According to the invention, a nonaqueous-electrolyte secondary battery is provided in which the separator has a specific electroconductive layer and which therefore is so safe that even when a battery module includes a defective cell and comes into an overcharged state in which a voltage of several tens of volts for the whole battery module is applied to one or a small number of single cells, this module can be prevented from short-circuiting or exploding.

The reasons why the overcharge resistance of a nonaqueous-electrolyte secondary battery can be greatly improved by forming a specific electroconductive layer on the separator for the nonaqueous-electrolyte secondary battery have not been elucidated in detail. It is, however, presumed that the electro conductive layer formed on a separator surface exerts some influence on the electric field present in the battery which is in an overcharged state, thereby attaining the improvement.

It has also been simultaneously found that performance regarding a cycle test, storage test, or the like is improved as a result of a secondary effect of the formation, of the specific electroconductive layer on the separator. Although the reasons therefor have not been elucidated in detail, it is presumed that the electroconductive layer serves some faction in preventing the separator from deteriorating.

Modes for Carrying Out the Invention

Embodiments of the invention will be explained below in detail. The following explanations on constituent elements are for embodiments (representative embodiments) of the invention, and the invention should not be construed as being limited to the specific embodiments and can be variously modified within the spirit of the invention.

[Separators for Nonaqueous-Electrolyte Secondary Battery]

The separators for nonaqueous-electrolyte secondary batteries of the invention (hereinafter often referred to as "separators of the invention") each are

a separator for use in a nonaqueous-electrolyte secondary battery comprising a positive electrode and a negative electrode which are capable of occluding and releasing lithium, a separator, and a nonaqueous electrolytic solution comprising a nonaqueous solvent and an electrolyte,

and are **characterized in that** (1) the separator has an electroconductive layer, and the clectroconductive layer has an apparent volume resistivity of $1\times10^{-4}$ $\Omega$·cm to $1\times10^{6}$ $\Omega$·cm and a film thickness less than 5 $\mu$m,

or (2) the separator has an electroconductive layer, and the electroconductive layer has a volume resistivity of $1\times10^{-6}$ $\Omega$·cm to $1\times10^{6}$ $\Omega$·cm and a film thickness less than 5 $\mu$m,

or (3) the separator has an electroconductive layer, and the electroconductive layer has a surface electrical resistance of $1\times10^{-2}$ $\Omega$ to $1\times10^{9}$ $\Omega$ and a film thickness less than 5 $\mu$m.

{Base}

The separators of the invention can be produced, for example, using as a base a. separator for use in ordinary nonaqueous-electrolyte secondary batteries or a porous film or nonwoven fabric obtained by a conventionally known method, by forming an electroconductive layer on at least one of the surfaces of the base or by sandwiching an electroconductive layer between the bases. There are no particular limitations on the constituent material of the base and on processes for production thereof.

Examples of methods for obtaining the separator main body (conventional separator) or porous film to be used as the base of the separators of the invention include the following methods.

(1) Extraction method which includes adding to a polyolefin resin a low-molecular substance that is compatible with the polyolefin resin and is capable of being extracted in a later step, melt-kneading the mixture, forming the resultant composition into a sheet, and extracting the low-molecular substance to render the sheet porous after or before stretching.

(2) Stretching method in which a crystalline resin is formed into a sheet in a high draft ratio and the high-elasticity sheet produced is subjected to low-temperature stretching and high-temperature stretching to render the sheet porous.

(3) Interface separation method which includes adding an inorganic or organic filler to a thermoplastic resin, melt-kneading the mixture, forming the resultant composition into a sheet, and stretching the sheet to cause separation at the interface between the resin and the filler and thereby render the sheet porous.

(4) $\beta$-Crystal nucleating agent method which includes adding a $\beta$-crystal nucleating agent to a polypropylene resin, melt-kneading the mixture, forming the resultant composition into a sheet in which $\beta$-crystal have been generated, stretching the sheet, and rendering the sheet porous by utilizing crystal transition.

More specifically, examples of the base for the separators for nonaqueaus-electralyte secondary batteries of the invention include the conventional three-layer separator (polypropylene/polyethylene/polypropylene) used in Examples which will be given later and a single-layer separator (polyethylene) obtained by the extraction method. However, the base should not be construed as being limited to these examples.

{Electroconductive Layers}

< Electroconductive Materials>

Materials for constituting the electroconductive layers according to the invention (hereinafter often referred to as "electroconductive materials") are not particularly limited, and any material having electrical conductivity may be used. For example, a metal or a carbonaceous material can be used.

In the case where the electroconductive material is a metal and a nonaqueous-electrolyte secondary battery is assembled, criteria for selecting suitable metallic materials differ between the electroconductive layer which faces the positive electrode and the electroconductive layer which faces the negative electrode.
Namely, in the case where the electroconductive layer facers the positive electrode, the electroconductive layer is exposed to a high potential and, hence, it is preferred to use gold or platinum, which each has a high oxidation potential, or an alloy of either. Furthermore, a valve metal which forms a passive-state coating film upon anodization is also suitable. Examples of the valve metal include aluminum, tungsten, molybdenum, titanium, and tantalum. Stainless steel having a coating film of chromium oxide is also suitable.

With respect to the electroconductive layer which faces the negative electrode, it is necessary to select a metallic material that does not form an alloy with lithium. Examples of such a metal include copper, nickel, titanium, iron, molybdenum, and chromium, and all of these are suitable.

In the case where the electroconductive material is a carbonaceous material, there is no particular difference between the electroconductive layer which faces the positive electrode and the electroconductive layer which faces the negative electrode. All of graphites, finely particulate amorphous carbon, such as carbon blacks and needle coke, and nanocarbon materials, such as carbon nanotubes, are suitable. Such carbonaceous materials are not particularly limited in the processes used for production thereof. With respect to graphites, any of natural graphites and artificial graphites is suitable. With respect to carbon blacks, any of Ketjen Black, channel black, furnace black, acetylene black, thermal black, lamp black, and the like, which are black carbon powders obtained by the incomplete combustion of natural gas, acetylene, anthracene, naphthalene, coal tar, aromatic petroleum fraction, etc., is suitable.

One electroconductive material may be used alone, or a mixture of two or more electroconductive materials may be used.

<Methods of Formation>

Methods for forming each electroconductive layer are not particularly limited, and known methods may be used. One example is a method in which an electroconductive layer is formed on at least one of the surfaces of the base described above, by a technique such as sputtering, ion plating, or vacuum deposition. Other examples include a method which includes mixing an electroconductive material with a binder and the likes in a solvent to prepare a slurry, applying the slurry to at least one of the surfaces of a base with a doctor blade, roll coater, or die coater or by a known technique such as dipping or spraying, and drying the applied slurry to form an electroconductive layer.

In the case where an electroconductive layer is formed by the coating of slurry, the solvent, binder, and other ingredients to be used for slurry preparation can be selected at will according to the electroconductive material and the resin constituting the base. For example, in the case where an electroconductive layer employing a carbon black as an electroconductive material is to be formed through coating of slurry on a surface or a base made of a polyolefin, use can be made of, one or more water-soluble compounds, e.g., poly(vinyl alcohol) and sodium carboxymethyl cellulose, as a binder and use of water as a solvent is suitable. In this case, an electroconductive layer hence is formed by dispersing a carbon black in an aqueous poly(vinyl alcohol) solution or an aqueous solution of sodium carboxymethyl cellulose, applying the resultant slurry to a separator surface, and drying the slurry applied.

The solid concentration of the electroconductive material in the slurry is generally 1 to 50% by weight, preferably 3 to 40% by weight, more preferably 5 to 30% by weight. So long as the solid concentration of the electroconductive material is not lower than the lower limit, the slurry does not have too low viscosity and coating unevenness is less apt to occur. So long as the solid concentration of the electroconductive material is not higher than the upper limit, the slurry does not have too high viscosity and can be easily applied.

The content of the binder, e.g., poly(vinyl alcohol), in the slurry is generally 1 to 50 parts by weight, preferably 3 to 35 parts by weight, more preferably 5 to 20 parts by weight, per 100 parts by weight of the electroconductive material. In case where the binder is used in too small amount, the force for binding particles of the electroconductive material to one another is low. There are hence cases where the resultant electroconductive layer has insufficient mechanical strength and is destroyed by the expansion and contraction of the active material which are caused by charge/discharge. Conversely, in case where the binder is used in too large amount, the binder forms a coating film on the surface of the electroconductive material or base separator to reduce the gas permeability of the separator or give an electroconductive layer having insufficient electrical conductivity.

In the case where an electroconductive layer is formed inside a separator, examples of methods therefor include: a method in which a porous base is laminated to the separator having an electroconductive layer formed on one surface thereof as described above; and a method in which multilayer molding is conducted so that an electroconductive material is incorporated into an inner layer.

<Thickness>

The thickness of each electroconductive layer is less than 5 $\mu$m, and the lower limit thereof is preferably 0.001 $\mu$m or more, more preferably 0.003 $\mu$m or more, even more preferably 0.005 $\mu$m or more. When the thickness of the electroconductive layer is not less than the lower limit, the effect of improving overcharge resistance is more sufficiently produced. However, in case where the thickness of the electroconductive layer is 5 $\mu$m or more, the electroconductive-layer part has too high gas permeation resistance and, hence, too high ion permeation resistance, resulting in a decrease in battery performance, e.g., output.

In the case of an electroconductive layer constituted of a metallic material, the thickness of the electroconductive layer is preferably 0.001 to 1 $\mu$m, more preferably 0.003 to 0.5 $\mu$m, even more preferably 0.005 to 0.3 $\mu$m, especially preferably 0.005 to 0.1 $\mu$m. When the thickness of the electroconductive layer is not less than the lower limit, the effect of improving overcharge resistance is more sufficiently produced. In case where the thickness of the electroconductive layer is 5 $\mu$m or more, considerable heat generation occurs due to absorption of the oxygen evolved by overcharge, and the separator hence suffers thermal shrinkage, meltdown, etc., as stated above. Such too large thicknesses of the electroconductive layer are hence undesirable.

An electroconductive layer may be formed only on one of the surfaces of a separator or formed on each surface thereof, or may be formed as an interlayer in an inner part. However, it is preferred to form an electroconductive layer on one or each surface.

In the case where an electroconductive layer is to be formed on each of both surfaces of a separator, the total thickness of the electroconductive layers on both surfaces is less than 10 $\mu$m, from the standpoint of inhibiting the overall thickness of the separator from becoming large. In the case of an electroconductive layer employing a carbonaceous material, the thickness thereof is preferably 0.002 $\mu$m or more, more preferably 0.01 $\mu$m or more. In the case of an electroconductive layer constituted of a metallic material, the thickness thereof is preferably 0.002 to 1 $\mu$m, more preferably 0.01 to 0.6 $\mu$m, even more preferably 0.01 to 0.2 $\mu$m.

In the case where an electroconductive layer is formed on each of both surfaces of a separator, the electroconductive layers respectively formed on both surfaces of the separator may be different or equal in thickness or in the electroconductive material used. For example, use may be made of a method in which a metal suitable for the side facing a negative electrode is used on one surface of a separator and a metal suitable for the side facing a positive electrode is used on the other surface of the separator.

The thickness of each electroconductive layer is measured by the method described in the section Examples, which will be given later.

<Surface Electrical Resistance, Surface Resistivity, and Volume Resistivity>

The separators of the invention have an electroconductive layer which has

(1) an apparent volume resistivity of $1 \times 10^{-4}$ $\Omega \cdot$cm to $1 \times 10^{6}$ $\Omega \cdot$cm, (2) a volume resistivity of $1 \times 10^{-6}$ $\Omega \cdot$cm to $1 \times 10^{6}$ $\Omega \cdot$cm, or (3) a surface electrical resistance of $1 \times 10^{-2}$ $\Omega$ to $1 \times 10^{9}$ $\Omega$.

(1) The apparent volume resistivity of the electroconductive layer is $1 \times 10^{-4}$ $\Omega \cdot$cm to $1 \times 10^{6}$ $\Omega \cdot$cm, preferably $1 \times 10^{-4}$ to $1 \times 10^{5}$ $\Omega \cdot$cm, more preferably $1 \times 10^{-4}$ to $1 \times 10^{4}$ $\Omega \cdot$cm.

(2) The volume resistivity of the electroconductive layer is $1 \times 10^{-6}$ $\Omega \cdot$cm to $1 \times 10^{6}$ $\Omega \cdot$cm, preferably $1 \times 10^{-3}$ to $1 \times 10^{3}$ $\Omega \cdot$cm, more preferably $1 \times 10^{-2}$ to $1 \times 10^{2}$ $\Omega \cdot$cm.

The term volume resistivity means a value inherent in the material constituting the electroconductive layer. The electroconductive layer is porous because of the necessity of permeation passages for ions, e.g., lithium ions. Consequently, due to the influence of the interstices and the influences of the resistance of contact between particles of the electroconductive material, etc., the apparent volume resistivity of the electroconductive layer has a higher value than the volume resistivity, which is inherent in the electroconductive material.

In case where the apparent volume resistivity or volume resistivity of the electroconductive layer exceeds the upper limit, the effect of sufficiently improving overcharge resistance which is brought about by the invention is difficult to obtain, although the reasons therefor have not been elucidated in detail. In case where the apparent volume resistivity or volume resistivity thereof is lower than the lower limit, the electroconductive layer has increased gas permeation resistance. There are hence cases where that property of the separator as lithium ion movement paths are provided is impaired. In addition, when the apparent volume resistivity or volume resistivity thereof is lower than the lower limit, there are cases where this electroconductive layer functions as a current collector and there is a fear that the separator may suffer thermal deterioration due to Joule's heat.

(3) The surface electrical resistance of the electroconductive layer is $1\times10^{-2}$ to $1\times10^9$ $\Omega$, preferably $1\times10^{-1}$ to $1\times10^8$ $\Omega$, more preferably 1 to $1\times10^7$ $\Omega$.

The surface resistivity of the electroconductive layer is preferably $4\times10^{-2}$ to $1\times10^9$ $\Omega/\square$, more preferably $1\times10^{-1}$ to $1\times10^8$ $\Omega/\square$, even more preferably 1 to $1\times10^7$ $\Omega/\square$.

In case where the surface electrical resistance of the electroconductive layer exceeds the upper limit, the effect of sufficiently improving overcharge resistance which is brought about by the invention is difficult to obtain, although the reasons therefor have not been elucidated in detail. In case where the surface electrical resistance thereof is lower than the lower limit, the electroconductive layer has increased gas permeation resistance. There are hence cases where that property of the separator by which lithium ion movement paths are provided is impaired. In addition, when the surface electrical resistance thereof is lower than the lower limit, there are cases where this electroconductive layer functions as a current collector and there is a fear that the separator may suffer thermal deterioration due to Joule's heat.

Incidentally, the surface electrical resistance, surface resistivity, and apparent volume resistivity of an electroconductive layer are determined, for example, by the following methods (see Examples given later).

The surface electrical resistance can be measured with measuring apparatus Loresta EP and Hiresta UP, manufactured by DIA Instruments Co., Ltd. (the name has changed to Mitsubishi Chemical Analytech Co., Ltd.).

The surface resistivity can be calculated from the surface electrical resistance and the correction coefficient for each probe which has been opened to the public by Mitsubishi Chemical Analytech Co., Ltd., using the following equation.

$$\text{Surface resistivity} = (\text{surface electrical resistance})\times(\text{correction coefficient})$$

The apparent volume resistivity can be calculated using the following equation.

$$\text{Apparent volume resistivity} = (\text{surface resistivity})\times(\text{thickness of the electroconductive layer})$$

Incidentally, volume resistivity is a value inherent in the material constituting the electroconductive layer, and is determined on the basis of, for example, Kagaku Binran Kiso-hen, 5th revised edition, II, p. 611, Table 14.9, published by Maruzene Co., Ltd. on February 20, 2004, With respect to acetylene black, however, the value of volume resistivity was obtained from the list of properties which is given on the homepage of Denki Kagaku Kogyo K.K.

<Features>

The electroconductive layers according to the invention each may be formed on at least one of the surfaces of a separator or may be formed as an interlayer sandwiched between bases, as stated above. The electroconductive layers are clearly distinguished, as shown below, from the conventional techniques for imparting electrical conductivity to a separator, such as the techniques described in the Patent Documents 2 to 5 described above. Due to the characteristic configurations thereof, excellent overcharge resistance is obtained.

With respect to the separator employing an antistatic agent which is described in the Patent Document 2, antistatic agents generally are used for the prevention of static buildup on the basis of adsorption of moisture present in the air and utilization of the resultant liberated ions. Consequently, as stated above, the antistatic agent in the proposed separator cannot produce the effect thereof in nonaqueous-electrolyte secondary batteries, in which moisture has been basically excluded.

In contrast, the electroconductive layer formed on or in each separator of the invention is constituted, for example, of a metal or a carbonaceous material and sufficiently exhibits electrical conductivity even in the environment within nonaqueous-electrolyte secondary batteries from which moisture has been excluded.

The technique described in the Patent Document 3, in which a layer of an alkali metal powder is formed on a separator surface to improve irreversibility, has the following drawback as described above. Since alkali metals are highly reactive metals and readily react with the oxygen and moisture present in the air, the formation of a layer of such a metal on a separator surface poses a serious problem concerning safety. In contrast, the electroconductive layer according to the invention is not highly reactive unlike alkali metals and can be handled in ordinary environments. The electroconductive layer according to the invention has excellent handleability.

The separator described in the Patent Document 4, which includes a thermoplastic resin and an electroconductive filler incorporated therein, does not have electrical conductivity at the time of normal use of the battery as stated above.

The electroconductive layer according to the invention is present on a surface of the separator or as an interlayer of the separator. Consequently, the electroconductive layer does not cause short-circuiting of the positive and negative electrodes at the time of normal use of the battery and can impart sufficient electrical conductivity according to need.

The separator described in the Patent Document 5 is brittle in view of strength, and it is highly probable that the battery in an overcharged state suffers internal short-circuiting, as stated above. In contrast, the electroconductive layer according to the invention is present on a surface of the separator or as an interlayer of the separator and has a thickness less than 5 $\mu$m, Consequently, the electroconductive layer according to the invention exerts substantially no or little influence on the strength of the separator, and can sufficiently withstand expansion of the active material during overcharge. The electroconductive layer hence poses no problem such as internal short-circuiting. Furthermore, the separator described in the Patent Document 5 has a thickness-direction thermal conductivity of 0.5 W/(m·K) or higher because this separator contains a highly thermally conductive filler in a large amount, whereas the separators of the invention have a thickness-direction thermal conductivity of about 0.2 W/(m·K).

{Porosity}

The separators of the invention have a porosity, as the degree of porousness, of generally 30 to 90%, preferably 35 to 80%, more preferably 38 to 70%. So long as the porosity of the separators is not lower than the lower limit, the separators do not have too high electrical resistance and there is no possibility of resulting in a decrease in battery performance such as output. Such porosities are hence preferred. So long as the porosity thereof is not higher than the upper limit, the separators have high mechanical strength and there is no possibility that the separators might break when wound at a high speed or might cause internal short-circuiting due to expansion and contraction of an active material during charge/discharge. Such porosities are hence preferred.

The porosity of a separator in the invention is defined by the following gravimetric method.

First, when the thickness of the separator (overall thickness including the thickness of the electroconductive layer) is expressed by t0, the weight per unit area (overall weight including the weight of the electroconductive layer) is expressed by w0, and the average specific gravity is expressed by $\rho$, then the porosity Pv of the separator can be obtained using the following equation.

$$Pv \, (\%) = 100 \times \{1 - (w0/[\rho \cdot t0])\}$$

(The area of the sample is the unit area.)
Incidentally, the average specific gravity $\rho$ can be obtained using

$$\rho = 1/(\Sigma ki/\rho i)$$

wherein $\rho i$ is the specific gravities of the base, e.g., a porous film, and of the component(s) of the electroconductive layer, and ki is the weight proportions thereof per unit area. The weight proportions can be obtained by making a weight measurement before and after formation of the electroconductive layer.

{Thickness}

The thickness of each of the separators of the invention (overall thickness including the thickness of the electroconductive layer) is generally 5 to 50 $\mu$m, preferably 9 to 35 $\mu$m, more preferably 15 to 30 $\mu$m. So long as the thickness of the separator is not less than the lower limit, mechanical strength is obtained and there is no possibility that the separator might break when wound at a high speed or might cause internal short-circuiting due to expansion and contraction of an active material during charge/discharge. Such thicknesses are hence preferred. So long as the thickness of the separator is not larger than the upper limit, the separator does not have too high electrical resistance and there is no possibility of resulting in a decrease in battery performance such as output. Such thicknesses are hence preferred.

{Puncture Strength}

The puncture strength of each separator of the invention (puncture strength of the separator including the electroconductive layer) is generally 250 g or higher, preferably 300 g or higher, more preferably 350 g or higher. So long as the puncture strength thereof is 250 g or higher, the separator can resist the pressure caused by expansion of an active material during overcharge and the possibility of resulting in internal short-circuiting is low. Such puncture strengths are hence preferred. There is no particular preferred upper limit on the puncture strength thereof, and the separator may have as high a puncture strength as possible so long as the properties which are required of the separator, such as electrical resistance, from the standpoint of battery performance are satisfied. However, the puncture strength thereof is generally 800 g or lower.
The term "puncture strength of a separator" in the invention means the strength measured by the method described below.

<Measurement of Puncture Strength>

A needle made of a metal (SUS 440C) and having a diameter of 1 mm and a radius of curvature of the point of 0.5 mm is stuck into a sample (test part: circular area having a diameter of 20 mm) fixed with a holder, in the thickness direction of the sample at a rate of 300 mm/min. The maximum load required for hole formation is measured.

<Gas Permeability>

The Gurley air permeability of the porous film or nonwoven fabric to be used as a base of a separator of the invention, the film or fabric being obtained by a conventionally known method, is 10 see/100 cc to 800 sec/100 cc, preferably 50 sec/100 cc to 600 sec/100 cc, more preferably 100 sec/100 cc to 400 sec/100 cc. There are cases where an electroconductive layer formed on a porous base offers resistance to gas permeation, resulting in a decrease in gas permeability. However, since the air permeability of a porous base is closely related with ion permeation resistance, it is preferred that the decrease in gas permeability should be up to 10%. Namely, it is preferred that formation of an electroconductive layer on a porous base should result in an increase in Gurley air permeability of 10% or less. Incidentally, Gurley air permeability was measured with a B-type Gurley densometer (manufactured by Toyo Seiki Seisaku-Sho, Ltd.) in accordance with JIS P8117.

The present inventors further made investigations diligently and, as a result, have found that the overcharge resistance of the separators of the invention is further improved by regulating the meltdown temperature of the separators to 170°C or higher. Namely, by using the separators which have an electroconductive layer and have a meltdown temperature of 170°C or higher, nonaqueous-electrolyte secondary batteries are provided, the batteries being so safe that even when a battery module includes a defective cell and comes into an overcharged state in which a voltage of several tens of volts for the whole battery module is applied to one or a small number of single cells, this module can be more reliably prevented from short-circuiting or exploding.

The meltdown temperature of the separators is preferably 170°C or higher, more preferably 180°C or higher, even more preferably 200°C or higher, especially preferably 220°C or higher. When the lower limit is satisfied, overcharge resistance tends to improve greatly. There is no particular upper limit on the meltdown temperature, and it is preferred that the separators retain their shape up to higher temperatures. However, the meltdown temperature thereof is generally 1,000°C or lower.

The reasons why the overcharge resistance of the nanaqueous-electrolyte secondary batteries can be greatly improved by forming an electroconductive layer on or in the separators for nonaqueous-electrolyte secondary batteries and by regulating the separators so as to have a meltdown temperature of 170°C or higher have not been elucidated in detail. However, with respect to the effect of the electroconductive layer formed on or in the separators, it is presumed that the improvement is attributable to some influence of the electroconductive layer on the electric field present in the battery which is in an overcharged state. With respect to the meltdown temperature of a separator, it is thought that the meltdown temperature thereof is basically governed by the melting point of the material constituting the base. In the case of bases made of resins, temperature ranges in which the bases are practically usable are as described in, for example, Saishin Tainetsu-Sei Kōbunshi, published by Sogo Gijutsu Center K.K., page 6, right column, lines 1 to 4 from top (published on May 1, 1987) (the Non-Patent Document 2). Specifically, in the case of noncrystalline resins, the bases are practically usable at up to temperatures lower by 20 to 30°C than the glass transition temperatures. In the case of crystalline resins, the bases are practically usable at up to temperatures lower than the melting points by several tens of degrees centigrade. In many cases, the resins begin to soften at higher temperatures. It is therefore thought that in most separators having a meltdown temperature lower than 170°C, the base resins constituting the separators begin to soften at a temperature of about 150°C or lower. It is thought that once the resin begins to soften, the separator suffers thermal shrinkage, deformation, etc., resulting in, for example, breakage of the electroconductive paths of the electroconductive layer formed in or on the separator. As a result, the effect of improving overcharge resistance which is produced by the electroconductive layer is presumed to be reduced. The reasons why 150°C is a threshold value for overcharge resistance have not been elucidated in detail. However, since nonaqueous electrolytic solutions undergo thermal decomposition and reactions with the positive electrode at 150 to 160°C as described in Saishin Richiumu Jon Niji Denchi, published by Johokiko Co., Ltd., page 65, lines 7 to 8 from top (published on February 29, 2008) (the Non-Patent Document 3), it is thought that the gas and other by-products thus yielded exert some influence.

{Base}

As the base of each of the separators of the invention, use can be suitably made of a porous film, nonwoven fabric, or the like obtained by a conventionally known method, so long as the meltdown temperature thereof is 170°C or higher. This base is not particularly limited in constituent material or process for production thereof. By forming an electroconductive layer on or in the base, a separator can be produced.
Even in the case of a base having a meltdown temperature lower than 170°C, use may be made of a method in which a heat-resistant layer is formed on at least one of the surfaces of this base to configure a separator which as a whole has a meltdown temperature of 170°C or higher. The heat-resistant layer may be constituted of either an organic material such as a resin or an inorganic material such as an inorganic filler, or the two materials may be used in combination.

{Heat-Resistant Layer}

Examples of methods for imparting a meltdown temperature of 170°C or higher to a separator of the invention include a method in which a heat-resistant porous layer is formed on a separator base obtained by any of the known methods as mentioned above. It is necessary that a heat-resistant porous layer should be formed on at least one of the surfaces of a base. Bases may be disposed respectively on both surfaces of a heat-resistant layer, or a heat-resistant layer may be formed on each of both surfaces of a baste. It is, however, more preferred to form a heat-resistant layer on each of both surfaces of a base. The heat-resistant layer may be constituted of an inorganic or organic filler having heat resistance or inorganic or organic fibers having heat resistance, or may be constituted of a heat-resistant resin. One of these materials may be used alone, or two or more materials may be suitably selected and used.
A heat-resistant layer can be easily formed on a base, for example, by using a known technique such as application, spraying, or the like of a slurry containing an inorganic or organic filler or containing inorganic or organic fibers or a solution of a heat-resistant resin. Examples of the technique include a normal-rotation roll coater, reverse roll coater, gravure coater, knife coater, blade coater, rod coater, air-doctor coater, curtain coater, fountain coater, die coater, kiss-roll coater, spin coater, cast coater, dip coating, and spray coating.
Alternatively, a heat-resistant layer may be formed using electrospinning, or a heat-resistant layer may be formed using a technique such as multilayer molding.
The heat-resistant layer may be constituted of an inorganic or organic filler having heat resistance or inorganic or organic fibers having heat resistance, or may be constituted of a heat-resistant resin. One of these materials may be used alone, or two or more materials may be suitably selected and used.
Examples of the inorganic filler having heat resistance include: carbonates such as calcium carbonate, magnesium carbonate, and barium carbonate; sulfates such as calcium sulfate, magnesium sulfate, and barium sulfate; chloride such as sodium chloride, calcium chloride, and magnesium chloride; oxides such as aluminum oxide, calcium oxide, magnesium oxide, zinc oxide, titanium oxide, and silica; and silicates such as talc, clay, and mica. Preferred of these from the standpoint of solvent resistance are oxides such as aluminum oxide, magnesium oxide, and titanium oxide and sulfates such as magnesium sulfate and barium sulfate. Especially preferred are aluminum oxide, magnesium oxide, titanium oxide, and barium sulfate.
Examples of the organic filler having heat resistance include particles made of heat-resistant resins such as polymethylpentene, polyamides, polyimides, poly(amide-imide)s, polycarbonates, poly(ethylene terephthalate), poly(butylene terephtalate), poly(ethylene naphthalate), poly(trimethylene terephthalate), polysulfones, poly(phenylene sulfide), polyetherketones, polyethersulfones, polyetherimides, polytetrafluoroethylene, tatrafluoroethylene/hexafluoropropylene copolymers, tetrafluoroethylene/perfluoroalkyl vinyl ether copolymers, polychlorotrifluoroethylene, poly(vinyl fluoride), ethylene/tetrafluoroethylene copolymers, and ethylene/chlorotrifluoroethylene copolymers. Alternatively, use can be made of particles of a crosslinked resin such as a crosslinked methacrylic resin or particles of a high-melting-point organic substance such as benzoguanamine or a norbornene oligomer.

Examples of the inorganic fibers having heat resistance include amorphous fibers such as glass fibers, polycrystalline fibers such as alumina fibers, and single-crystal fibers such as potassium titanate fibers.

As the organic fibers having heat resistance, cellulose fibers or fibers made of any of the heat-resistant resins as mentioned above are suitable.

As the resin for forming a heat-resistant layer, the heat-resistant resins are suitable. In the case of solvent-soluble resins, a heat-resistant layer can be formed by producing a resin solution and applying the solution. In the case of sparingly solvent-soluble resins, a heat-resistant layer can be formed using a technique such as multilayer molding or the like so long as the resins are thermoplastic resins.

In the case where a filler is used in the heat-resistant layer, the content of the filler is generally 60 to 99 parts by weight, preferably 70 to 97 parts by weight, more preferably 80 to 95 parts by weight, per 100 parts by weight of the heat-resistant layer. So long as the content of the filler per 100 parts by weight of the heat-resistant layer is 60 parts by weight or more, the heat-resistant layer can have sufficient heat resistance. So long as the content of the filler per 100 parts by weight of the heat-resistant layer is less than 99 parts by weight, the heat-resistant layer can have sufficient strength by the action of the other ingredient(s) including a binder.

The particle diameter of the filler to be used in the heat-resistant layer is generally 0.001 $\mu$m to 3 $\mu$m, preferably 0.01 $\mu$m to 2 $\mu$m, more preferably 0.05 $\mu$m to 1 $\mu$m. The aspect ratio of the filler is generally 1 to 10, preferably 1 to 5, more preferably 1 to 2.

So long as the particle diameter of the filler is 0.001 $\mu$m or more, the filler is less apt to suffer aggregation or the like during formation of a heat-resistant layer and it is possible to form a heat-resistant layer of an even structure. So long as the particle diameter of the filler is 3 $\mu$m or less, a heat-resistant layer having a reduced thickness can be formed and the heat-resistant layer can be prevented from reducing gas permeability and, hence, ion permeability. By using a filler having an aspect ratio of 10 or less, a heat-resistant layer can be configured densely.

[Nonaqueous-Electrolyte Secondary Battery]

The nonaqueous-electrolyte secondary battery of the invention is a nonaqueous-electrolyte secondary battery including a positive electrode and a negative electrode which are capable of occluding and releasing lithium, a separator, and a nonaqueous electrolytic solution obtained by dissolving an electrolyte in a nonaqueous solvent, and is characterized in that the separator is any of the separators of the invention for nonaqueous-electrolyte secondary batteries.

{Nonaqueous Electrolytic Solution}

<Nonaqueous Solvent>

As the nonaqueous solvent for the electrolytic solution to be used in the nonaqueous-electrolyte secondary battery of the invention, use can be made of any desired nonaqueous solvent which is known as a solvent for nonaqueous-electrolyte secondary batteries. Examples thereof include: alkylene carbonates such as ethylene carbonate, propylene carbonate, and butylene carbonate; dialkyl carbonates such as dimethyl carbonate, diethyl carbonate, di-n-propyl carbonate, and ethyl methyl carbonate (the alkyl groups of each dialkyl carbonate preferably are alkyl groups having 1 to 4 carbon atoms); cyclic ethers such as tetrahydrofuran and 2-methyltetrahydrofuran; chain ethers such as dimethoxyethane and dimethoxymethane; cyclic carboxylic acid esters such as $\gamma$-butyrolactone and $\gamma$-valeralactone; and chain carboxylic acid esters such as methyl acetate, methyl propionate, an ethyl propionate. One of these solvents may be used alone, or two or more thereof may be used in combination.

<Electrolyte>

As the electrolyte serving as a solute of the nonaqueous electrolytic solution, use is generally made of, a lithium salt. As this lithium salt, any desired lithium salt can be used. Examples thereof include: inorganic lithium salts such as $LiClO_4$, $LiPF_6$, and $LiBF_4$; and fluorine-containing organic lithium salts such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiPF_4(CF_3)_2$, $LiPF_4(C_2F_5)_2$, $LiPF_4(CF_3SO_2)_2$, $LiPF_4(C_2F_5SO_2)_2$, $LiBF_2(CF_3)_2$, $LiBF_2(C_2F_5)_2$, $LiBF_2(CF_3SO_2)_2$, and $LiBF_2(C_2F_5SO_2)_2$, Preferred of these are $LiPF_6$, $LiBF_4$, $LiCF_3SO_3$, $LiN(CF_3SO_2)_2$, and $LiN(C_2F_SSO_2)_2$. Especially preferred are $LiPF_6$ and $LiBF_4$. With respect to such lithium salts also, one of these may be used alone, or two or more thereof may be used in combination.

The lower limit of the concentration of these lithium salts in the nonaqueous electrolytic solution is generally 0.5 mol/L or higher, especially 0.75 mol/L or higher. The upper limit thereof is generally 2 mol/L or lower, especially 1.5 mol/L or lower. In case where the concentration of the lithium salts exceeds the upper limit, the nonaqueous electrolytic solution has an increased viscosity and a reduced electrical conductivity. In case where the concentration of the lithium salts is lower than the lower limit, the nonaqueous electrolytic solution has a reduced electrical conductivity. It is therefore preferred to prepare the nonaqueous electrolytic solution having a concentration within that range.

<Other Ingredients>

Besides the nonaqueous solvent and the electrolyte, other useful ingredients may be incorporated into the nonaqueous electrolytic solution according to the invention. Examples of the other ingredients include conventionally known various additives such as an overcharge inhibitor, a dehydrating agent, a deacidifying agent, and an aid for improving capacity retentivity and cycle characteristics after high-temperature storage.

Examples of the aid for improving capacity retentivity and cycle characteristics after high-temperature storage, among those ingredients, include: carbonate compounds such as vinylene carbonate, fluoroethylene carbonate, trifluoropropylene carbonate, phenylethylene carbonate, and erythritan carbonate; carboxylic acid anhydrides such as succinic anhydride, glutaric anhydride, maleic anhydride, citraconic anhydride, glutaconic anhydride, itaconic anhydride, diglycolic anhydride, cyclohexanedicarboxylic anhydride, cyclopentanetetracarboxylic dianhydride, and phenylsuccinic anhydride; sulfur-containing compounds such as ethylene sulfite, 1,3-propanesultone, 1,4-butanesultone, methyl methanesulfonate, busulfan, sulfolane, sulfolene, dimethyl sulfone, and tetramethylthiuram monosulfide; nitrogen-containing compounds such as 1-methyl-2-pyrrolidinone, 1-methyl-2-piperidone, 3-methyl-2-oxazolidinone, 1,3-dimethyl-2-imidazolidinone, and N-methylsuccinimide; and hydrocarbon compounds such as heptane, octane, and cycloheptane. In the case where the nonaqueous electrolytic solution contains these aids, the concentration thereof in the nonaqueous electrolytic solution is generally 0.1-5% by weight,

The present inventors furthermore made investigations diligently and, as a result, have found that overcharge resistance can be further improved by producing a nonaqueous-electrolyte secondary battery using a combination with an electrolytic solution which satisfies the following requirement (1) or (2).

(1) The case where a nonaqueous electrolytic solution including a nonaqueous solvent and an electrolyte dissolved therein contains a fluorinated carbonate:

Use of a carbonate having a fluorine atom (this carbonate is hereinafter often referred to simply as "fluorinated carbonate") in an electrolytic solution is known (JP-A-2008-192504 (the Patent Document 10), JP-A-2005-38722 (the Patent Document 11), JP-A-2008-257988 (the Patent Document 12), JP-A-2009-163939 (the Patent Document 13), and JP-A-2010-10078 (the Patent Document 14))). However, no investigations have been made on overcharge which occurs when the final charge voltage is 20 V to several hundred volts as in battery modules for EVs or HEVs.

Also known is a technique in which a halogen-substituted carbonic acid ester is added (JP-A-2004-241339 (the Patent Document 15)). However, the high potential in this technique is 4.8 V, and no investigation has been made therein on overcharge prevention during charge in which the final charge voltage is 20 V to several hundred volts as in battery modules for EVs or HEVs.

As described above, a new technique for inhibiting overcharge reactions in battery modules for EVs or HEVs on the basis of a reaction which occurs at a voltage of several tens of volts or higher is being desired. However, a technique which satisfies this requirement has not been found.

The present inventors diligently made investigations in order to overcome that problem and, as a result, have found that overcharge resistance can be even more greatly improved by using any of the separators of the invention in combination with an electrolytic solution containing a fluorinated carbonate. Thus, it is possible to provide nonaqueous-electrolyte secondary batteries which are so safe that even when a battery module includes a defective cell and comes into an overcharged state in which a voltage of several tens of volts for the whole battery module is applied to one or a small number of single cells, this module can be more reliably prevented from short-circuiting or exploding.

The reasons why a combination of any of the separators of the invention and an electrolytic solution containing a fluorinated carbonate can greatly improve overcharge resistance have not been elucidated in detail. However, it is presumed that the electroconductive layer formed on a surface of the separator exerts some influence on the electric field present in the battery in an overcharged state and thereby makes short-circuiting less apt to occur. It is further presumed that the presence of the fluorinated carbonate, in the overcharged-state battery, significantly accelerates passivation of the surface of a current collector, or leads to the densification. They are presumed to be related with the improvement. In particular, since the reaction for forming a passive-state coating film is accelerated in a high-voltage high-temperature environment, it is presumed that the increases in voltage and temperature caused by overcharge exert a considerable influence. It is also thought that the electroconductive layer formed on the separator surface exerts some influence on the electric field present in the battery. It is hence presumed that the electroconductive layer has some effect also on the formation of a passive-state coating film and, as a result, produces a synergistic effect. It is presumed that the formation of a passive-state coating film increases the internal resistance of the battery to reduce the charging current and, hence, serves to enhance safety of the battery which is in an overcharged state.

As the fluorinated carbonate, either a cyclic carbonate or a chain carbonate can be used.

The chain carbonate having a fluorine atom (this carbonate is hereinafter often referred to simply as ""fluorinated chain carbonate") is not particularly limited so long as the fluorinated chain carbonate has a fluorine atom. However, the number of fluorine atoms thereof is generally 6 or less, preferably 4 or less.
Representatively, use is made of a compound represented by the general formula $C=O(OR^1)(OR^2)$ (wherein $R^1$ and $R^2$ each are an alkyl group having one or two carbon atoms, and at least one of $R^1$ and $R^2$ has a fluorine atom). Examples thereof include dimethyl carbonate derivatives, ethyl methyl carbonate derivatives, and diethyl carbonate derivatives.

Examples of the dimethyl carbonate derivatives include fluoromethyl methyl carbonate, difluoromethyl methyl carbonate, trifluoromethyl methyl carbonate, bis(fluoromethyl) carbonate, bis(difluoro)methyl carbonate, and bis(trifluoro) methyl carbonate.

Examples of the ethyl methyl carbonate derivatives include 2-fluoroethyl methyl carbonate, ethyl fluoromethyl carbonate, 2,2-difluoroethyl methyl carbonate, 2-fluoroethyl fluoromethyl carbonate, ethyl difluoromethyl carbonate, 2,2,2-trifluoroethyl methyl carbonate, 2,2-difluoroethyl fluoromethyl carbonate, 2-fluoroethyl difluoromethyl carbonate, and ethyl trifluoromethyl carbonate.

Examples of the diethyl carbonate derivatives include ethyl- (2-fluoroethyl) carbonate, ethyl-(2,2-difluoroethyl) carbonate, bis(2-fluoroethyl) carbonate, ethyl-(2,2,2-trifluoroethyl) carbonate, 2,2-difluoroethyl 2'-fluoromethyl carbonate, bis(2,2-difluoroethyl) carbonate, 2,2,2-trifluoroeoiyl 2'-fluoroethyl carbonate, 2,2,2-trifluoroetllyl 2',2'-difluoroethyl carbonate, and bis(2,2,2-trifluoroethyl) carbonate.
Of these, trifluoroethyl methyl carbonate and ethyl trifluoroethyl carbonate are preferred because the two carbonates can have high overcharge-preventive performance while enabling battery characteristics including electrical conductivity to be maintained in batteries having an increased size.

The cyclic carbonate having a fluorine atom (hereinafter often referred to simply as "fluorinated cyclic carbonate") is not particularly limited so long as the carbonate is a cyclic carbonate having a fluorine atom.

Representative examples of the fluorinated cyclic carbonate include cyclic carbonate derivatives having an alkylene group with 2 to 6 carbon atoms. Specifically, the examples include ethylene carbonate derivatives formed by replacing one or two of the hydrogen atoms contained as components in ethylene carbonate with a fluorine atom and/or a fluorinated alkyl group. The alkyl group generally has 1 to 4 carbon atoms, and the number of fluorine atoms contained as components in the fluorinated cyclic carbonate is generally 1 or more and 8 or less, preferably 3 or less.

Specific examples thereof include monofluoroethylene carbonate, 4,4-difluoroethylene carbonate, 4,5-difluoroethylene carbonate, 4-fluoro-4-methylethylene carbonate, 4,5-difluoro-4-methylethylene carbonate, 4-fluoro-5-methylethylene carbonate, 4,4-difluoro-5-methylethylene carbonate, 4-(fluoromethyl)ethylene carbonate, 4-(difluoromethyl) ethylene carbonate, 4-(trifluoromethyl)ethylene carbonate, 4-(fluoromethyl)-4-fluoroethylene carbonate, 4-(fluoromethyl)-5-fluoroethylene carbonate, 4-fluoro-4,5-dimethylethylene carbonate, 4,5-difluoro-4,5-dimethylethylene carbonate, and 4,4-difluoro-5,5-dimethylethylene carbonate.

More preferred of those fluorinated cyclic carbonates are monofluoroethylene carbonate, 4,4-difluoroethylene carbonate, 4,5-difluoroetliylene carbonate, and 4,5-difluoro-4,5-dimethylethylene carbonate, because these carbonates impart high ionic conductivity and satisfactorily form an internee-protective coating film.

It is also preferred that a cyclic carbonate having a unsaturated bond and a fluorine atom (this carbonate is hereinafter often referred to simply as "fluorinated unsaturated cyclic carbonate") should be used as the fluorinated cyclic carbonate. The fluorinated unsaturated cyclic carbonate is not particularly limited. Especially preferred are fluorinated unsaturated cyclic carbonates having one or two fluorine atoms.

Examples of the fluorinated unsaturated cyclic carbonate include vinylene carbonate derivatives and ethylene carbonate derivatives substituted with an aromatic ring or a substituent having a carbon-carbon unsaturated bond.

Examples of the vinylene carbonate derivatives include 4-fluoxovinylene carbonate, 4-fluoro-5-methylvinylene carbonate, 4-fluoro-5-phenylvinylene carbonate, and 4,5-difluoroethylene carbonate.

Examples of the ethylene carbonate derivatives substituted with an aromatic ring or a substituent having a carbon-carbon unsaturated bond include 4-fluoro-4-vinylethylene carbonate, 4-fluoro-5-vinylethylene carbonate, 4,4-difluoro-4-vinylethylene carbonate, 4,5-difluoro-4-vinylethylene carbonate, 4-fluoro-4,5-divinylethylene carbonate, 4,5-difluoro-4,5-divinylethylene carbonate, 4-fluoro-4-phenylethylene carbonate, 4-fluoro-5-phenylethylene carbonate, 4,4-difluoro-5-phenylethylene carbonate, and 4,5-difluoro-4-phenylethylene carbonate.

The fluorinated cyclic carbonate is not particularly limited in molecular weight. Use can be made of fluorinated cyclic carbonates having a molecular weight which is preferably 50 or higher, more preferably 80 or higher, and is preferably 250 or lower, more preferably 150 or lower. So long as the fluorinated cyclic carbonate has a molecular weight of 250 or lower, this carbonate has satisfactory solubility in the nonaqueous electrolytic solution and it is easy to produce the effects of the invention. Processes for producing the fluorinated cyclic carbonate also are not particularly limited, and the carbonate can be produced by a known method selected at will.

With respect to the amount of the fluorinated carbonate to be used, the upper limit thereof in terms of proportion by volume in the electrolytic solution is preferably 20% or less, more preferably 15% or less. The lower limit thereof is preferably 1% or more, more preferably 5% or more. When the amount thereof is within that range, the fluorinated carbonate neither lowers electrical conductivity nor reduces the battery performance of large batteries, and brings about an improvement in effect on overcharge.

(2) The case where a nonaqueous electrolytic solution including a nonaqueous solvent and an electrolyte dissolved therein further contains, as at least one auxiliary electrolyte, at least one compound selected from the group consisting of lithium borates, lithium phosphates, lithium fluorophosphates, lithium carboxylates, lithium sulfonates, imide lithium salts, lithium oxalatoborates, lithium oxalatophosphates, and lithium methides, the concentration of all auxiliary electrolytes in the electrolytic solution being 0.01 mol/L to 0.3 mol/L:

Examples of techniques in which an auxiliary electrolyte is used include techniques disclosed in JP-A-2002-260728 (the Patent Document 16), JP-A-10-21960 (the Patent Document 17), and JP-A-2004-273152 (the Patent Document 18).
The Patent Document 16 discloses a technique in which an oxygen-containing lithium salt is added as an auxiliary electrolyte. However, in a battery in which an oxygen-containing lithium salt has been added to the nonaqueous electrolytic solution, a side reaction proceeds during use of the battery, resulting in a gradual increase in irreversible capacity. Consequently, even though the technique is effective in protecting the current collectors, it has been difficult to obtain satisfactory battery characteristics therewith. In addition, proper combinations and concentrations of auxiliary electrolytes have not been sufficiently investigated, and the proposed technique has been insufficient as a measure against overcharge of batteries having high capacity and high output, such as batteries for motor vehicles.

The Patent Document 17 discloses a technique in which lithium tetrafluoroborate is added to a nonaqueous electrolytic solution. The Patent Document 18 discloses an electrolytic solution to which a compound including $BF_4^-$ as an anion has been added. However, no investigation has been made therein not only on an action on the positive-electrode current collector or an effect on overcharge but also on the state in which a high voltage of several tens of volts or higher is applied to one battery. The proposed techniques have been insufficient as techniques for improving overcharge resistance.

As described above, although a new technique for inhibiting overcharge reactions through a reaction which occurs at a voltage of several tens of volts or higher is desired in battery modules for EVs or EVs, no technique which satisfies that requirement has been found so far.

The present inventors diligently made investigations in order to accomplish that subject and, as a result, have found that overcharge resistance can be even more greatly improved by using any of the separators of the invention in combination with an electrolytic solution containing a specific amount of a specific auxiliary electrolyte. Thus, it is possible to provide nonaqueous-electrolyte secondary batteries which are so safe that even when a battery module includes a defective cell and comes into an overcharged state in which a voltage of several tens of volts for the whole battery module is applied to one or a small number of single cells, this module can be more reliably prevented from short-circuiting or exploding.

The reasons why a combination of any of the separators of the invention and an electrolytic solution containing a specific amount of a specific auxiliary electrolyte can greatly improve overcharge resistance have not been elucidated in detail. However, it is presumed that the electroconductive layer formed on a surface of the separator exerts some influence on the electric field present in the battery in an overcharged state and thereby makes short-circuiting less apt to occur. It is further presumed that the presence of, the auxiliary electrolyte, in the overcharged-state battery, significantly accelerates passivation of the surface of a current collector, or leads to the densification. They are presumed to be related with the improvement. In particular, since the reaction for forming a passive-state coating film is accelerated in a high-voltage high-temperature environment, it is presumed that the increases in voltage and temperature caused by overcharge exert a considerable influence. It is also thought that the electroconductive layer formed on the separator surface exerts some influence on the electric field present in the battery. It is hence presumed that the electroconductive layer has some effect also on the formation of a passive-state coating film and, as a result, produces a synergistic effect. It is presumed that the formation of a passive-state coating film increases the internal resistance of the battery to reduce the charging current and, hence, serves to enhance safety of the battery which is in an overcharged state.

As the auxiliary electrolyte, a lithium salt is usually used. The lithium salt is not particularly limited so long as the salt is known to be for use in this application, and any desired lithium salt can be used. Examples thereof include the following.

Examples thereof include:

lithium borates such as lithium tetrafluoroborate;

lithium fluorophosphates such as lithium fluorophosphate and lithium difluorophosphate;

lithium carboxylates such as lithium formate, lithium acetate, lithium monofluoroacetate, lithium difluoroacetate, and lithium trifluoroacetate;

lithium sulfonates such as lithium fluorosulfonate, lithium methanesulfonate, lithium monofluoromethanesulfonale, lithium difluoromethanesulfonate, and lithium trifluoromethanesulfonate;

imide lithium salts such as $LiN(FCO_2)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, the lithium salt of cyclic 1,2-perfluoroethanedisulfonylimide, the lithium salt of cyclic 1,3-perfluoropropanedisulfonylimide, and $LiN(CF_3SO_2)(C_4F_9SO_2)$;

lithium methide salts such as $LiC(FSO_2)_3$, $LiC(CF_3SO_2)_3$, and $LiC(C_2F_5SO_2)_3$;

lithium oxalatoborate salts such as lithium difluorooxalatoborate;

lithium oxalatophosphate salts such as lithium tetrafluorooxalatophosphate and lithium difluorooxalatophosphate; and

other fluorine-containing organolithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_2(CF_3)_2$, $LiBF_2(C_2F_5)_2$, $LiBF_2(CF_3SO_2)_2$, and $LiBF_2(C_2F_5SO_2)_2$.

Preferred of those are lithium fluorophosphates, lithium borates, and imide lithium salts from the standpoint that these salts do not reduce battery performance. Specific examples of such compounds include lithium tetrafluorobarate, lithium perchlorate, lithium bis(trifluoromethanesulfonyl)imide, lithium bis(pentafluoroethanesulfonyl)imide, lithium trifluoromethanesulfonate, lithium bis(fluorosulfonyl)imide, and lithium bis(trifluorosulfonyl)imide. Especially preferred of these are lithium tetrafluoroborate (hereinafter referred to as "LiBF4"), lithium bis(fluorosulfonyl)imide (hereinafter referred to as "LiFSI"), and lithium bis(trifluarasulfonyl)imide (hereinafter referred to as "LiTFSI") from the standpoint that these salts are apt to act on the surface of current collectors of aluminum.

With respect to the total concentration of all auxiliary electrolytes in the electrolytic solution, the lower limit thereof is preferably 0.01 mol/L or higher, more preferably 0.015 mal/L or higher. The upper limit thereof is preferably 0.3 mol/L or lower, more preferably 0.2 mol/L or lower. When the total concentration of all auxiliary electrolytes is within that range, the auxiliary electrolytes neither reduce electrical conductivity nor lower the battery performance of large batteries, and bring about an improvement in effect on overcharge.

{Positive Electrode}

The positive electrode to be used in the nonaqueous-electrolyte secondary battery of the invention usually is an electrode obtained by forming on a current collector an active-material layer including a positive-electrode active material and a binder.

Examples of the positive-electrode active material include materials capable of occluding and releasing lithium, such as lithium-transition metal composite oxides, e.g., lithitim-cobalt oxides, lithium-nickel oxides, and lithium-manganese oxides. It is preferred that the active-material should contain a Ni-Mn-Co alloy. One of those materials may be used alone, or two or more thereof may be used in combination.

The binder is not particularly limited so long as the binder is a material which is stable to the solvent to be used for electrode production and to the electrolytic solution and other materials to be used when the battery is used. Examples thereof include poly(vinylidene fluoride), polytetrafluoroethylene, fluorinated poly(vinylidene fluoride), EPDM (ethylene/propylene/diene terpolymers), SBR (styrene/butadiene rubbers), NBR (acrylonitrile/butadiene rubbers), SBS (styrene/butadiene/styrene elastomers), fluororubbers, poly(vinyl acetate), poly(methyl methacrylate), polyethylene, and nitrocellulose. One of these materials may be used alone, or two or more thereof may be used in combination.

With respect to the proportion of the binder in the positive-electrode active-material layer, the lower limit thereof is generally 0.1% by weight or higher, preferably 1% by weight or higher, more preferably 5% by weight or higher. The upper limit thereof is generally 80% by weight or lower, preferably 60% by weight or lower, more preferably 40% by weight or lower, even more preferably 10% by weight or lower. So long as the proportion of the binder is not lower than the lower limit, the active material can be sufficiently held to impart mechanical strength to the positive electrode, and battery performance including cycle characteristics can be made satisfactory. So long as the proportion thereof is not higher than the upper limit, there is no possibility of resulting in a decrease in battery capacity or electrical conductivity.

The positive-electrode active-material layer usually contains an electroconductive agent so as to have enhanced electrical conductivity, Examples of the electroconductive agent include carbonaceous materials such as fine particles of graphites, e.g., natural graphites and artificial graphites, and fine particles of amorphous carbon, e.g., carbon blacks including acetylene black and needle coke. One of these materials may be used alone, or two or more thereof may be used in combination. With respect to the proportion of the electroconductive agent in the positive-electrode active-material layer, the lower limit thereof is generally 0.01% bey weight or higher, preferably 0.1% by weight or higher, more preferably 1% by weight or higher. The upper limit thereof is generally 50% by weight or lower, preferably 30% by weight or lower, more preferably 15% by weight or lower. So long as the proportion of the electroconductive agent is not lower that the lower limit, sufficient electrical conductivity is obtained. So long as the proportion thereof is not higher than the upper limit, there is no possibility of resulting in a decrease in battery capacity.

Besides those ingredients, common additives for active-material layers, e.g., a thickener, can be incorporated into the positive-electrode active-material layer.

The thickener is not particularly limited so long as the thickener is a material which is stable to the solvent to be used for electrode production and to the electrolytic solution and other materials to be used when the battery is used. Examples thereof include carboxymethyl cellulose, methyl cellulose, hydroxymethyl cellulose, ethyl cellulose, poly(vinyl alcohol), oxidized starch, phosphorylated starch, and casein. One of these materials may be used alone, or two or more thereof may be used in combination.

As the current collector for the positive electrode, use is made of aluminum, stainless steel, nickel-plated steel, or the like. The positive-electrode current collector may have any desired thickness. However, the thickness thereof is generally I $\mu$m or more, preferably 3 $\mu$m or more, more preferably 5 $\mu$m or more, and is generally 100 $\mu$m or less, preferably 50 $\mu$m or less, more preferably 20 $\mu$m or less. So long as the thickness of the positive-electrode current collector is not less than the lower limit, the strength required of a current collector is obtained. So long as the thickness of the current collector is not larger than the upper limit, the proportion by volume of the active material which can be incorporated into the battery is not reduced and a required battery capacity is obtained.

In the case of aluminum foils, which are in most common use, the surface electrical resistance of the positive-electrode current collector is $6\times10^{-3}$ to $6\times10^{-5}$ $\Omega$ when the thickness thereof is in the range of 1 $\mu$m to 100 $\mu$m, although the surface electrical resistance thereof varies depending on the thickness thereof. By regulating the surface electrical resistance of the electroconductive layer formed on the separator surface to a value higher than the surface electrical resistance of the positive-electrode current collector, the electroconductive layer can be prevented from functioning as a positive-electrode current collector and the separator can be prevented from being thermally deteriorated by Joule's heat.

The positive electrode can be formed by slurring the positive-electrode active material, binder, and electroconductive agent described above with a solvent optionally together with other additives, applying the slurry to a current collector, and drying the slurry applied.

As the solvent for slurry formation, an organic solvent in which the binder dissolves is usually used. For example, N-methylpyrrolidone, dimethylfarmamide, dimethylacetamide, methyl ethyl ketone, cyclohexanone, methyl acetate, methyl acrylate, diethyltriamine, N,N-dimethylaminopropylamine, ethylene oxide, tetrahydrofuran, or the like is used. However, the solvent is not limited to these examples. One of these solvents may be used alone, or two or more thereof may be used in combination. Use may be made of a method in which a dispersant, a thickener, etc, are added to water and an active material is slurried using a latex of, for example, an SBR.

The thickness of the positive-electrode active-material layer thus formed is generally about 10 to 200 $\mu$m. It is preferred that the active-material layer obtained by coating of slurry and drying should by pressed and densified with a roller press or the like in order to heighten the loading density of the active material.

{Negative Electrode}

The negative electrode to be used in the nonaqueous-electrolyte secondary battery of the invention usually is an electrode obtained by forming on a current collector an active-material layer including a negative-electrode active material and a binder.

As the negative-electrode active material, use can be made of: carbonaceous materials capable of occluding and releasing lithium, such as pyrolysis products obtained by pyrolyzing organic substances under various conditions, artificial graphites, and natural graphites; metal oxide materials capable of occluding and releasing lithium, such as tin oxide and silicon oxide; lithium metal; various lithium alloys; and the like. One of these negative-electrode active materials may be used alone, or a mixture of two or more thereof may be used.

The binder is not particularly limited so long as the binder is a material which is stable to the solvent to be used for electrode production and to the electrolytic solution and other materials to be used when the battery is used. Examples thereof include poly(vinylidene fluoride), polytetrafluoroethylene, styrene/butadiene rubbers, isoprene rubbers, and butadiene rubbers. One of these materials may be used alone, or two or more thereof may be used in combination.

With respect to the proportion of the binder in the negative-electrode active-material layer, the lower limit thereof is generally 0.1% by weight or higher, preferably 1% by weight or higher, more preferably 5% by weight or higher. The upper limit thereof is generally 80% by weight or lower, preferably 60% by weight or lower, more preferably 40% by weight or lower, even more preferably 10% by weight or lower, So long as the proportion of the binder is not lower than the lower limit, the active material can be sufficiently held to thereby impart sufficient mechanical strength to the negative electrode, and battery performance including cycle characteristics can be made satisfactory. So long as the proportion thereof is not higher than the upper limit, there is no possibility of resulting in a decrease in battery capacity or electrical conductivity.

The negative-electrode active-material layer may contain an electroconductive agent so as to have further enhanced electrical conductivity. Examples of the electroconductive agent include carbonaceous materials such as fine particles of amorphous carbon, e.g., carbon blacks including acetylene black and needle coke. One of these materials may be used alone, or two or more thereof may be used in combination. With respect to the proportion of the electroconductive agent in the negative-electrode active-material layer, the lower limit thereof is generally 0.01% by weight or higher, preferably 0.1% by weight or higher, more preferably 1% by weight or higher. The upper limit thereof is generally 50% by weight or lower, preferably 30% by weight or lower, more preferably 15% by weight or lower. So long as the proportion of the electroconductive agent is not lower that the lower limit, the required effect of improving electrical conductivity is obtained. So long as the proportion of the conducting agent is not higher than the upper limit, required electrical conductivity is obtained without flowering the proportion of the active material.

Besides those ingredients, common additives for active-material layers, e.g., a thickener, can be incorporated into the negative-electrode active-material layer. The thickener is not particularly limited so long as the thickener is a material which is stable to the solvent to be used for electrode production and to the electrolytic solution and other materials to be used when the battery is used. Examples thereof include carboxymethyl cellulose, methyl cellulose, hydroxymethyl cellulose, ethyl cellulose, poly(vinyl alcohol), oxidized starch, phosphorylated starch, and casein. One of these materials may be used alone, or two or more thereof may be used in combination.

As the current collector for the negative electrode, use is made of copper, nickel, stainless steel, nickel-plated steel, or the like. The negative-electrode current collector may have any desired thickness. However, the thickness thereof is generally 1 $\mu$m or more, preferably 3 $\mu$m or more, more preferably 5 $\mu$m or more, and is generally 100 $\mu$m or less, preferably 50 $\mu$m or less, more preferably 20 $\mu$m or less, So long as the thickness of the negative-electrode current collector is not less than the lower limit, the strength required of a current collector is obtained, So long as the thickness of the current collector is not larger than the upper limit, there is no possibility that the proportion by volume of the active material which can be incorporated into the battery might be reduced, and a required battery capacity is obtained.

In the case of copper foils, which are in most common use, the surface electrical resistance of the negative-electrode current collector is $4 \times 10^{-3}$ to $4 \times 10^{-5}$ $\Omega$ when the thickness thereof is in the range of 1 $\mu$m to 100 $\mu$m, although the surface electrical resistance thereof varies depending on the thickness thereof. By regulating the surfaces electrical resistance of the electroconductive layer formed on the separator surface to a value higher than the surface electrical resistance of the negative-electrode current collector, the electroconductive layer can be prevented from functioning as a negative-electrode current collector and the separator can be prevented from being thermally deteriorated by Joule's heat.

The negative electrode can be formed by slurrying the negative-electrode active material, binder, and electroconductive agent described above with a solvent optionally together with other additives, applying the slurry to a current collector, and drying the slurry applied.

As the solvent for slurry formation, an organic solvent in which the binder dissolves is usually used. For example, N-methylpyrrolidone, dimethylformamide, dimethylacetamide, methyl ethyl ketone, cyclohexanone, methyl acetate, methyl acrylate, diethyltriamine, N,N-diniethylaminopropylamine, ethylene oxide, tetrahydrofuran, or the like is used. However, the solvent is not limited to these examples. One of these solvents may be used alone, or two or more thereof may be used in combination. Use may be made of a method in which a dispersant, a thickener, etc. are added to water and an active material is slurried using a latex of, for example, an SBR.

The thickness of the negative-electrode active-material layer thus formed is generally about 10 to 200 $\mu$m, It is preferred that the active-material layer obtained by coating of slurry and drying should by pressed and densified with a roller press or the like in order to heighten the loading density of the active material.

{Battery Shape}

The shape of the nonaqueous-electrolyte secondary battery of the invention is not particularly limited, and can be suitably selected, according to the intended use thereof, from various shapes in general use. Examples of the battery shapes in general use include: a cylinder type in which sheet electrodes and separators have been spirally wound; a cylinder type of the inside-out structure including a combination of pellet electrodes and a separator; a coin type in which pellet electrodes and a separator have been laminated, and a laminate type in which sheet electrodes and a separator have been laminated.

{Method for Assembling the Nonaqueous-Electrolyte Secondary Battery}

Methods for assembling the nonaqueous-electrolyte secondary battery of the invention are not particularly limited, and can be suitably selected, according to the desired battery shape, from various methods in ordinary use. For example, the battery is produced by laminating any of the separators of the invention which have an electroconductive layer on at least one of the surfaces thereof and the nonaqueous electrolytic solution, positive electrode, and negative electrode described above, injecting a nonaqueous electrolytic solution into the space between the positive electrode and the negative electrode, and assembling these members into an appropriate shape. It is also possible to use other constituent elements, e.g., an outer case, according to need.

Incidentally, in the case where the separator of the invention to be used for assembling a nonaqueous-electrolyte secondary battery has an electroconductive layer only on one of the surfaces thereof, the lamination may be performed so that the electroconductive layer faces the positive-electrode side or the negative-electrode side. When the electroconductive material constituting the electroconductive layer is a metallic material suitable for use on the positive-electrode side, this electroconductive layer is made to face the positive-electrode side. When the electroconductive material is a metallic material suitable for use on the negative-electrode side, this electroconductive layer is made to face the negative-electrode side. In general, severe reactions such as decomposition of the electrolytic solution occur on the positive-electrode side, which is the higher-potential side. It is therefore presumed that separator short-circuiting due to overcharge occurs from the surface facing the positive electrode, although the reasons therefor have not been elucidated in detail. Consequently, it is preferred to dispose the separator so that the electroconductive layer of the separator faces at least the positive-electrode side.

{Applications}

Applications of the nonaqueous-electrolyte secondary battery of the invention are not particularly limited, and the battery can be used in various conventionally known applications. Examples thereof include small appliances such as notebook type personal computers, pen-input personal computers, mobile personal computers, eleetranic-Taoak players, portable telephones, portable facsimile telegraphs, portable copiers, portable printers, headphone stereos, video movie cameras, liquid-crystal TVs, handy cleaners, portable CAD players, mini-disk players, transceivers, electronic pocketbooks, electronic calculators, memory cards, portable tape recorders, radios, backup power sources, motors, illuminators, toys, game machines, clocks and watches, stroboscopes, and cameras. However, in view of the merit of having higher safety in an overcharged state, the nonaqueous-electrolyte secondary battery of the invention is especially suitable for use in large machines or devices, such as electric vehicles and hybrid electric vehicles. Namely, the battery of the invention is especially suitable as a lithium secondary battery for EVs pr HEWS.

Examples

The invention will be explained below in more detail with reference to Examples and Comparative Examples. However, the invention should not be construed as being limited to the following Examples unless the invention departs from the spirit thereof.

The methods used in the following Examples and Comparative Examples for measuring the surface electrical resistance and thickness of the electroconductive layer of a separator are as follows.

<Method for Measuring Surface Electrical Resistance of Electroconductive Layer>

Surface electrical resistance was measured using Loresta EP and Hiresta UP, manufactured by DIA Instruments Co., Ltd. (the name has changed to Mitsubishi Chemical Analytech Co., Ltd.). In the case where the surface electrical resistance was $10^6$ $\Omega$ or lower, a measurement was made by the four-probe method using a combination of Loresta EP and ASP probes (correction coefficient, 4.2353). In the case where the surface electrical resistance was $10^6$ $\Omega$ or higher, a measurement was made by the two-probe method using a combination of Hiresta UP and UA probes (correction coefficient, 1.050).

<Apparent Volume Resistivity of Electroconductive Layer>

Surface resistivity was determined using the correction coefficient for each probe which has been opened to the public by Mitsubishi Chemical Analytech Co., Ltd., by means of the following equation.

$$\text{Surface resistivity} = (\text{surface electrical resistance}) \times (\text{correction coefficient})$$

Furthermore, apparent volume resistivity was determined using the following equation.

$$\text{Apparent volume resistivity} = (\text{surface resistivity}) \times (\text{thickness})$$

<Method of Measuring Thickness of Electro conductive Layer>

The thickness of a film formed by sputtering or vapor deposition was measured with an apparatus P-15 for measuring level difference, surface roughness, and fine shape, which was manufactured by KLA-Tencor Corp.
The thickness of a film formed by coating of slurry was measured with UPTIGHT DIAL GAUGE, manufactured by Ozaki MFG. Co., Ltd.

<Measurement of Meltdown Temperature>

A piece is cut out of a separator of the invention and sandwiched between two aluminum plates which have outer dimensions of $60 \times 60$ mm and in which a rectangular hole of $30 \times 30$ mm has been formed. The four edges are fixed. This test sample is placed in a windowed oven together with a thermocouple, and the temperature is monitored. While the internal temperature of the oven is being elevated at a heating rate of 5 °C/min, the separator is visually examined. The temperature at which the formation of a hole extending from, the front to the back surface of the separator was observed was taken as a meltdown temperature.

[EXAMPLE 1]

<Preparation of Nonaqueous Electrolytic Solution>

In a dry argon atmosphere, sufficiently dried lithium hexafluorophosphate ($LiPF_6$) was dissolved, in such an amount as to result in a proportions thereof of 1,0 mol/L, in a solvent prepared by mixing ethylene carbonate and ethyl methyl carbonate in a volume ratio of 3/7. Thus, a nonaqueous electrolytic solution was obtained.

<Production of Positive Electrode>

$LiNi_{1/3}Mn_{1/3}Co_{1/3}O_2$ was used as a positive-electrode active material. To 90 parts by weight of $LiNi_{1/3}Mn_{1/3}Co_{1/3}O_2$ were added 5 parts by weight of acetylene black and 5 parts by weight of poly(vinylidene fluoride) (trade name "KF-1000", manufactured by Kureha Chemical Industry Co., Ltd.). The ingredients were mixed together, and the mixture was dispersed in N-methyl-2-gyrrolidone and slurried. The slurry obtained was evenly applied to each surface of an aluminum foil having a thickness of 15 $\mu$m as a positive-electrode current collector and dried. Thereafter, the coated foil was rolled with a pressing machine to a thickness of 81 $\mu$m, and pieces of a shape having an active-material layer size with a width of 100 mm and a length of 100 mm and having an uncoated area with a width of 30 mm were cut out of the rolled sheet. Thus, a positive electrode was obtained, The positive-electrode active-material layer had a density of 2.35 g/cm$^3$.

<Production of Negative Electrode>

A natural-graphite powder was used as a negative-electrode active material. To 98 parts by weight of a natural-graphite powder were added 100 parts by weight of an aqueous solution of sodium carboxymethyl cellulose (concentration of sodium carboxymethyl cellulose, 1% by weight) as a thickener and 2 parts by weight of an aqueous dispersion of a styrene/butadiene rubber (concentration of styrene/butadiene rubber, 50% by weight) as a binder, The ingredients were mixed together to form a slurry. The slurry obtained was applied to each surface of a rolled copper foil having a thickness of 10 $\mu$m as a negative-electrode current collector and dried. Thereafter, the coated foil was rolled with a pressing machine to a thickness of 75 $\mu$m, and pieces of a shape having an active-material layer size with a width of 104 mm and a length of 104 mm and having an uncoated area with a width of 30 mm were cut out of the rolled sheet. Thus, a negative electrode was obtained. The negative-electrode active-material layer had a density of 1.35 g/cm$^3$.

<Production of Separator>

A commercial three-layer separator (polypropylene/polyethylene/polypropylene) having a thickness of 25 $\mu$m, puncture strength of 380 g, and porosity of 39% was used as a base. One surface of the base was subjected to aluminum sputtering to form an electroconductive layer, The aluminum layer had a thickness of 25 nm and a surface electrical resistance of 26 $\Omega$. The separator on which the aluminum layer had been formed had a puncture strength of 350 g, and a porosity of 39%.

<Production of Battery>

Thirty-two sheets of the positive electrodes and 33 sheets of the negative electrodes were alternately laminate together with the separator interposed between the electrodes so that the aluminum layer formed by sputtering faced the positive electrode, In this laminating, the electrodes were positioned so that the positive-electrode active-material area of the positive electrode was within the negative-electrode active-material area of the negative electrode and these two active-material layer areas faced each other. With respect to each of the positive electrode and the negative electrode, the uncoated areas were bundled and spot-welded to produce a collecting tab. Thus, an electrode group was produced. This electrode group was introduced into a battery can made of aluminum (outer dimensions: 120 × 110 × 10 mm), and the battery can was sealed. As the battery can was used a battery can in which the cap part was equipped with collecting terminals for the positive and negative electrodes, a pressure release valve, and a nonaqueous-electrolytic-solution injection port. The collecting tabs were connected to the collecting terminals by spot welding. Thereafter, 20 mL of the nonaqueous electrolytic solution was injected into the battery can packed with the electrode group, and was sufficiently infiltrated into the electrodes. The injection port was closed to produce a battery.

<Overcharge Test>

The fresh battery which had not undergone charge/discharge cycling was subjected at 25°C to 5 cycles of initial charge/discharge in a voltage range of 4.1 to 3.0 V at a current value of 0.2 C (the value of current at which the rated capacity in terms of 1-hour-rate discharge capacity is discharged over 1 hour is referred to as 1 C; the same applies hereinafter).
Subsequently, an overcharge test was conducted also in a 25°C environment. The battery in a discharged state (3 V) was charged at a constant current of 3 C, and the behavior thereof was examined. The term "valve worked" means the phenomenon in which the gas release valve works to release a component of the nonaqueous electrolytic solution, and the term "exploded" means the phenomenon in which the battery can breaks violently and the contents are forcedly discharged.
The results of the overcharge test are shown in Table 1 .

[EXAMPLE 2]

The same commercial three-layer separator having a thickness of 25 μm as in Example 1 was used as a base, One surface of the base was subjected to molybdenum sputtering to form an electroconductive layer. The molybdenum layer had a thickness of 147 nm and a surface electrical resistance of 11 Ω. This separator had a puncture strength of 310 g and a porosity of 38%.
The separator obtained was used to produce a battery in the same manner as in Example 1, and this battery was subjected to the overcharge test.
The results thereof are shown in Table 1.

[EXAMPLE 3]

A battery was produced in the same manner as in Example 2, except that the separator obtained in Examples 2 was disposed so that the electroconductive layer thereof faced the negative electrode. This battery was subjected to the overcharge test.
The results thereof are shown in Table 1.

[EXAMPLE 4]

The same commercial three-layer separator having a thickness of 25 μm as in Example 1 was used as a base. Both surfaces of the base were subjected to molybdenum sputtering to form an electroconductive layer on each surface. The molybdenum layers each had a thickness of 147 nm and a surface electrical resistance of 11 Ω. This separator had a puncture strength of 280 g and a porosity of 36%. The separator obtained was used to produce a battery in the same manner as in Example 1, and this battery was subjected to the overcharge test. The results thereof are shown in Table 1.

[EXAMPLE 5]

The same commercial three-layer separator having a thickness of 25 μm as in Example 1 was used as a base.

One surface of the base was subjected to vapor deposition of graphite to form an electroconductive layer. The graphite layer had a thickness of 5 nm and a surface electrical resistance of $2\times10^7$ Ω. This separator had a puncture strength of 350 g and a porosity of 39%.

The separator obtained was used to produce a battery in the same manner as in Example 1, and this battery was subjected to the overcharge test.

The results thereof are shown in Table 1.

[EXAMPLE 6]

Fifteen parts by weight of acetylene black "Denka Black HS-100", manufactured by Denki Kagaku Kogyo K.K., 2.7 parts by weight of poly(vinyl alcohol) (average degree of polymerization, 1,700; degree of saponification, 99% or higher), and 82.3 parts by weight of water were evenly dispersed to prepare a slurry. This slurry was applied to one surface of the same commercial three-layer separator having a thickness of 25 μm as in Example 1, and then dried at 60°C to form an electroconductive layer having a thickness of 4.5 μm. This electroconductive layer had a surface electrical resistance of 664 Ω. This separator had a puncture strength of 380 g and a porosity of 39%.

The separator obtained was used to produce a battery in the same manner as in Example 1, and this battery was subjected to the overcharge test.

The results thereof are shown in Table 1.

[COMPARATIVE EXAMPLE 1]

The same commercial three-layer separator (polypropylene/polyethylene/polypropylene) as in Example 1 was used as such to produce a battery in the same manner as in Example 1. This battery was subjected to the overcharge test. The results thereof are shown in Table 1,

[EXAMPLE 7]

Fifteen parts by weight of the same graphite as in Example 4, 0.85 parts by weight of poly(vinyl alcohol) (average degree of polymerization, 1,700; degree of saponification, 99% or higher), and 84.15 parts by weight of water were evenly dispersed to prepare a slurry. This sluny was applied to one surface of a commercial three-layer separator having a thickness of 20 μm and a Gurley air permeability of 400 sec/100 cc, and then dried at 60°C to form an electroconductive layer having a thickness of 4.5 μm. This electroconductive layer had a surface electrical resistance of 0.9 Ω. This separator had a puncture strength of 350 g, porosity of 39%, and Gurley air permeability of 435 sec/100 cc, and had an increase in air permeability of 8.8%.

[COMPARATIVE EXAMPLE 2]

An electroconductive layer was formed on one surface of a commercial three-layer separator having a thickness of 20 μm and a Gurley air permeability of 400 sec/100 cc in the same manner as in Example 1, except that the thickness thereof was changed to 6 μm. This electroconductive layer had a surface electrical resistance of 0.6 Ω. This separator had a puncture strength of 350 g, porosity of 39%, and Gurley air permeability of 450 see/100 cc, and had an increase in air permeability of 12.5%.

[EXAMPLE 8]

Battery production and an overcharge test were conducted in the same manners as in Example 1, except that in the overcharge test, the rate of constant-current charge from the discharged state (3 V) was changed to 5 C. The results thereof are shown in Table 1.

[EXAMPLE 9]

Fifteen parts by weight of acetylene black "Denka Black His-100", manufactured by Denki Kagaku Kogyo KK, 2.7 parts by weight of poly(vinyl alcohol) (average degree of polymerization, 1,700; degree of saponification, 99% or higher), and 82.3 parts by weight of water were evenly dispersed to prepare a slurry. This slurry was applied to one surface of a commercial polyethylene separator having a thickness of 9 μm, and then dried at 60°C to form an electroconductive layer having a thickness of 3 μm. This electroconductive layer had a surface electrical resistance of $1.1\times10^3$ Ω. The separator obtained was laminated to a commercial polyethylene separator having a thickness of 9 μm so that the electroconductive layer was sandwiched therebetween. Thus, a separator having the electroconductive layer inside was produced. This separator was used to produce a battery in the same manner as in Example 1, and the battery was subjected to the overcharge test. The results thereof are shown in Table 1.

[COMPARATIVE EXAMPLE 3]

Two sheets of a commercial polyethylene separator having a thickness of 9 $\mu$m were laminated to each other. The resultant separators was used to produce a battery in the same manner as in Example 1, and the battery was subjected to the overcharge test. The results thereof are shown in Table 1.
[Table 1]

| | Separator | | | | | | | Puncture strength (g) | Porosity [%] | Gurley air permeability (sec/ 100 cc) | Electrolytic solution | | Electro-conducfive layer surface faces; | Results of overcharge test |
| | Electroconductive layer | | | | | | | | | | Solvent composition [volume ratio] | Li salt 1 [mol/L] | | |
| | Method of formation | Conductive material | Thickness (nm) | Surface electrical resistance ($\Omega$) | Surface resistivity ($\Omega/\square$) | Apparent volume resinstivity $\Omega \cdot cm$ | Volume resistivity $\Omega \cdot cn$ | | | | | | | |
| Example 1 | sputtering | Al | 25 | 26 | $1.10 \times 10^2$ | $2.75 \times 10^1$ | $2.5 \times 10^{-6}$ | 350 | 39 | | EC/EMC =3/7 | LiPF$_6$ 1.0 | positive electrode | valve worked at 49 minutes |
| Exampie 2 | sputtering | Mo | 147 | 11 | $4.66 \times 10^1$ | $6.85 \times 10^{-4}$ | $5.0 \times 10^{-6}$ | 310 | 38 | | EC/EMC =3/7 | LiPF$_6$ 1.0 | positive electrode | valve worked at 50 minutes |
| Example 3 | sputtering | Mo | 147 | 11 | $4.66 \times 10^1$ | $6.85 \times 10^{-1}$ | $5.0 \times 10^{-6}$ | 310 | 38 | | EC/EMC =3/7 | LiPF$_6$ 1.0 | negative electrode | valve worked at 48 minutes |
| Example 4 | sputtering | Mo | 147/147 | 11/11 | $4.66 \times 10^1/$ $4.66 \times 10^1$ | $6.85 \times 10^{-4}/$ $6.85 \times 10^{-1}$ | $5.0 \times 10^{-6}/$ $5.0 \times 10^{-6}$ | 280 | 36 | | EC/EMC =3/7 | LiPF$_6$ 1.0 | positive electrode/ negative electrode | valve worked at 50 minutes |
| Example 5 | vapor deposition | graphite | 5 | $2 \times 10^7$ | $2.10 \times 10^7$ | 10.5 | $1.38 \times 10^{-3}$ | 350 | 39 | | EC/EMC =3/7 | LiPF$_6$ 1.0 | positive electrode | valve worked at 43 minutes |
| Example 6 | coating of slurry | acetylene black | $4.5 \times 10^3$ | 664 | $2.81 \times 10^3$ | 1.27 | 0.19 | 380 | 39 | | EC/EMC =3/7 | LiPF$_6$ 1.0 | positive electrode | valve worked at 45 minute |
| Example 7 | coating of slurry | graphite | $4.5 \times 10^3$ | 0.9 | 3.81 | $1.71 \times 10^{-3}$ | $1.38 \times 10^{-3}$ | 350 | 39 | 435 increase in air permeability, 8.8% | EC/EMC =3/7 | LiPF$_6$ 1.0 | positive electrode | - |
| Example 8 (using inceased rate (5 C)) | sputtering | Al. | 25 | 26 | $1.10 \times 10^2$ | $2.75 \times 10^{-4}$ | $2.5 \times 10^{-6}$ | 350 | 39 | | EC/EHC =3/7 | LiPF$_6$ 1.0 | positive electrode | valve worked at 35 minutes |
| Example 9 (interlayer) | coating of slurry | acetylene black | $3 \times 10^3$ | $1.1 \times 10^3$ | $4.66 \times 10^3$ | 1.4 | 0.14 | - | - | | EC/EMC =3/7 | LiPF$_6$ 1.0 | - | valve worked at 30 minutes |
| Comparative Example 1 | - | - | | - | - | - | - | 380 | 39 | | EC/EMC =3/7 | LiPF$_6$ 1.0 | - | exploded at 42 minutes |

(continued)

| | Separator | | | | | | | Puncture strength (g) | Porosity [%] | Gurley air permeability (sec/ 100 cc) | Electrolytic solution | | Electro-conducfive layer surface faces; | Results of overcharge test |
| | Electroconductive layer | | | | | | | | | | Solvent composition [volume ratio] | Li salt 1 [mol/L] | | |
| | Method of formation | Conductive material | Thickness (nm) | Surface electrical resistance ($\Omega$) | Surface resistivity ($\Omega/\square$) | Apparent volume resinstivity $\Omega \cdot cm$ | Volume resistivity $\Omega \cdot cn$ | | | | | | | |
| Comparative Example 2 | coating of slurry | graphite | $6 \times 10^3$ | 0.6 | 2.54 | $1.52 \times 10^{-1}$ | $1.38 \times 10^{-3}$ | 350 | 39 | 450 increase in air permeability, 12.5% | EC/EMC =3/7 | LiPF$_6$ 1.0 | positive electrode | - |
| Comparative Example 3 (interlayer) | - | - | - | - | - | - | - | - | - | | EC/EKC =3/7 | LiPF$_6$ 1.0 | - | exploded at 25 minutes |

[EXAMPLE 10]

The electrolytic solution, positive electrode, negative electrode, and separator produced in Example 1 were used to produce a cylindrical battery of the 18650 type so that the electroconductive layer faced the positive electrode. Thereafter, the battery was subjected at 25°C to 5 cycles of initial charge/discharge in a voltage range of 4.1 to 3.0 V at a current value of 0.2 C. Subsequently, in an environment of 60°C, this battery was subjected to 350 cycles of charge/discharge in a voltage range of 4.1 to 3.0 V at a current value of 2 C. The discharge capacity retention thereof at the time of completion of the 350 cycles was 75% based on the initial discharge capacity.

[COMPARATIVE EXAMPLE 4]

A cylindrical battery of the 18650 type was produced in the same manner as in Example 6, except that use was made of the same commercial three-layer separator (polypropylene/polyethylene/polypropylene) as the separator used in Example 1 as a base. This battery was subjected to the cycle test, The discharge capacity retention thereof at the time of completion of the 350 cycles was 65% based on the initial discharge capacity.

[EXAMPLE 11]

A cylindrical battery of the 18650 type was produced in the same manner as in Example 10, except that the graphite-vapor-deposited separator produced in Example 5 faced the positive electrode. At 25°C, this battery was subjected to 5 cycles of initial charge/discharge in a voltage range of 4.1 to 3.0 V at a current value of 0.2 C. Subsequently in an environment of 60°C, this battery was charged to 4.3 V at a current value of 0.2 C, thereafter stored for 2 weeks while maintaining the voltage of 4.3 V, and then discharged to 3.0 V. This battery was disassembled, and the separator was examined. The separator had suffered no discoloration or the like, and remained unchanged.

[COMPARATIVE EXAMPLE 5]

A cylindrical battery of the 18650 type was produced in the same manner as in Example 7, except that use was made of the same commercial three-layer separator (polypropylene/polyethylene/polypropylene) as the separator used in Example 1 as a base. This battery was subjected to the storage test. The battery was disassembled and the separator was examined, in the same manner as in Example 7. As a result, the separator had discolored and deteriorated.

[EXAMPLE 12]

A battery was produced in the same manner as in Example 1, except that a solution prepared in a dry argon atmosphere by dissolving sufficiently dried $LiPF_6$ and $LiBF_4$ as lithium salts, in such amounts as to result in proportions thereof of 1.0 mol/L and 0.2 mol/L, respectively, in a solvent prepared by mixing ethylene carbonate and ethyl methyl carbonate in a volume ratio of 3/7 was used as a nonaqueous electrolytic solution. This battery was subjected to the overcharge test. The results thereof are shown in Table 2.

[EXAMPLE 13]

A battery was produced in the same manner as in Example 1, except that a nonaqueous electrolytic solution was prepared in a dry argon atmosphere by dissolving sufficiently dried $LiPF_6$ and $LiBF_4$ as lithium salts, in such amounts as to result in proportions thereof of 1.0 mol/L and 0.01 mol/L, respectively, in a solvent prepared by mixing ethylene carbonate and ethyl methyl carbonate in a volume ratio of 3/7. This battery was subjected to the overcharge test. The results thereof are shown in Table 2.

[EXAMPLE 14]

A battery was produced in the same manner as in Example 1, except that use was made of the electrolytic solution obtained in Example 12 and the separator obtained in Example 2. This battery was subjected to the overcharge test. The results thereof are shown in Table 2.

[EXAMPLE 15]

A battery was produced in the same manner as in Example 1, except that use was made of the electrolytic solution obtained in Example 13 and the separator obtained in Example 2. This battery was subjected to the overcharge test. The results thereof are shown in Table 2.

[EXAMPLE 16]

A battery was produced in the same manner as in Example 14, except that the electroconductive layer of the separator obtained in Example 2 was made to face the negative electrode, This battery was subjected to the overcharge test. The results thereof are shown in Table 2.

[EXAMPLE 17]

A battery was produced in the same manner as in Example 4, except that use was made of the electrolytic solution obtained in Example 12. This battery was subjected to the overcharge test. The results thereof are shown in Table 2.

[EXAMPLE 18]

A battery was produced in the same manner as in Example 1, except that use was made of the electrolytic solution obtained in Example 12 and the separator obtained in Example 5. This battery was subjected to the overcharge test. The results thereof are shown in Table 2.

[EXAMPLE 19]

A battery was produced in the same manner as in Example 1, except that use was made of the electrolytic solution obtained in Example 13 and the separator obtained in Example 5. This battery was subjected to the overcharge test. The results thereof are shown in Table 2.

[EXAMPLE 20]

A battery was produced in the same manner as in Example 1, except that use was made of the electrolytic solution obtained in Example 12 and the separator obtained in Example 6. This battery was subjected to the overcharge test. The results thereof are shown in Table 2.

[EXAMPLE 21]

A battery was produced in the same manner as in Example 1, except that use was made of the electrolytic solution obtained in Example 13 and the separator obtained in Example 6. This battery was subjected to the overcharge test. The results thereof are shown in Table 2.

[EXAMPLE 22]

A battery was produced in the same manner as in Example 5, except that a nonaqueous electrolytic solution was prepared in a dry argon atmosphere by dissolving sufficiently dried $LiPF_6$ and LiFSI as lithium salts, in such amounts as to result in proportions thereof of 1.0 mol/L and 0.1 mol/L, respectively, in a solvent prepared by mixing ethylene carbonate and ethyl methyl carbonate in a volume ratio of 3/7. This battery was subjected to the overcharge test. The results thereof are shown in Table 2.

[EXAMPLE 23]

A battery was produced in the same manner as in Example 5, except that a nonaqueous electrolytic solution was prepared in a dry argon atmosphere by dissolving sufficiently dried $LiPF_6$ and LiTFSI as lithium salts, in such amounts as to result in proportions thereof of 1.0 mol/L and 0.1 mol/L, respectively, in a solvent prepared by mixing ethylene carbonate and ethyl methyl carbonate in a volume ratio of 3/7. This battery was subjected to the overcharge test. The results thereof are shown in Table 2.

[Table 2]

| | Separator | | | | | | | Puncture strength (g) | Porosity (%) | Electrolytic solution | | | Electro-conductive layer surface faces: | Results of overcharge test |
|---|---|---|---|---|---|---|---|---|---|---|---|---|---|---|
| | Electroconductive layer | | | | | | | | | Solvent composition (volume ratio) | Li salt 1 (mol/L) | Li salt 2 (mol/L) | | |
| | Method of formatian | Conductive material | Thickness (nm) | Surface electrical resistance | Surface resistivity ($\Omega/\square$) | Apparent volume resistivity $\Omega\cdot$cm | Volume resistivity $\Omega\cdot$cm | | | | | | | |
| Example 12 | sputtering | A1 | 25 | 26 | $1.10 \times 10^2$ | $2.75 \times 10^{-4}$ | $2.5 \times 10^{-6}$ | 350 | 39 | EC/EMC =3/7 | $LiPF_6$ 1.0 | $= LiBF_4$ 0.2 | positive electrode | valve worked at 58 minutes |
| Example 13 | sputtering | A1 | 25 | 26 | $1.10 \times 10^2$ | $2.75 \times 10^{-4}$ | $2.5 \times 10^{-6}$ | 350 | 39 | EC/EMC =3/7) | $LiPF_6$ 1.0 | $LiPF_4$ 0.01 | positive electrode | valve worked at 54 minutes |
| Example 14 | sputtering | Mo | 147 | 11 | $4.66 \times 10^1$ | $6.85 \times 10^{-4}$ | $5.0 \times 10^{-6}$ | 310 | 38 | EC/EMC =3/7 | $LiPF_6$ 1.0 | $LiBF_4$ 0.2 | positive electrode | valve worked at 58 minutes |
| Example 15 | sputtering | Mo | 147 | 11 | $4.66 \times 10^1$ | $6.85 \times 10^{-4}$ | $5.0 \times 10^{-6}$ | 310 | 38 | EC/EMC =3/7 | $LiPE_6$ 1.0 | $LiBF_4$ 0.01 | positive electrode | valve worked at 55 minutes |
| Example 16 | sputtering | Mo | 147 | 11 | $4.66 \times 10^1$ | $6.85 \times 10^{-4}$ | $5.0 \times 10^{-6}$ | 310 | 38 | BC/EMC =3/7 | $LiPF_6$ 1.0 | $LiBF_4$ 0.2 | negative electrode | valve worked at 57 minutes |
| Example 17 | sputtering | Mo | 147/147 | 11/11 | $4.66 \times 10^1/ 4.66 \times 10^1$ | $6.85 \times 10^{-4}/ 6.85 \times 10^{-4}$ | $5.0 \times 10^{-6}/ 5.0 \times 10^{-6}$ | 280 | 36 | EC/EMC =3/7 | $LiPF_6$ $LiPF_6$ 1.0 | $LiBF_4$ $LiBF_4$ 0.2 | Positive electrode/ negative electrode | valve worked at 58 minutes |

(continued)

| | Separator | | | | | | | Puncture strength (g) | Porosity (%) | Electrolytic solution | | | Electro-conductive layer surface faces: | Results of overcharge test |
|---|---|---|---|---|---|---|---|---|---|---|---|---|---|---|
| | Electroconductive layer | | | | | | | | | Solvent composition (volume ratio) | Li salt 1 (mol/L) | Li salt 2 (mol/L) | | |
| | Method of formatian | Conductive material | Thickness (nm) | Surface electrical resistance | Surface resistivity $(\Omega/\square)$ | Apparent volume resistivity $\Omega\cdot cm$ | Volume resistivity $\Omega\cdot cm$ | | | | | | | |
| Example 18 | vapor deposition | graphite | 5 | $2\times10^1$ | $2.10\times10^7$ | 10.5 | $1.38\times10^{-3}$ | 350 | 39 | EC/EMC =3/7 | $LiPF_6$ 1.0 | $LiBF_4$ 0.2 | positive electrode | valve worked at 49 minutes |
| Example 19 | vapor depositian | graphite | 5 | $2\times10^7$ | $2.10\times10^7$ | 10.5 | $1.38\times10^{-3}$ | 350 | 39 | EC/EMC =3/7 | $LiPF_6$ 1.0 | $LiBF_4$ 0.01 | positive electrode | valve worked at 47 minutes |
| Example 20 | coating of slurry | acetylens black | $4.5\times10^3$ | 664 | $2.81\times10^3$ | 1.27 | 0.14 | 380 | 39 | EC/EMC =3/7 | $LiPF_6$ 1.0 | $LiBF_4$ 0.2 | positive electrode | valve worked at 52 minutes |
| Example 21 | coasting of slurry | acetylene black | $4.5\times10^3$ | 664 | $2.81\times10^5$ | 1.27 | 0.14 | 380 | 39 | EC/EMC =3/7 | $LiPF_6$ 1.0 | $LiBF_4$ 0.01 | positive electrode | valve worked at 49 minutes |
| Example 22 | vapor deposition | graphite | 5 | $2\times10^7$ | $2.10\times10^7$ | 10.5 | $1.38\times10^{-3}$ | 350 | 39 | EC/EMC =3/7 | $LiPF_6$ 1.0 | LiFSI 0.1 | positive electrode | valve worked at 48 minutes |
| Example 23 | vapor deposition | graphite | 5 | $2\times10^7$ | $2.10\times10^7$ | 10.5 | $1.38\times10^{-3}$ | 350 | 39 | EC/EMC =3/7 | $LiPF_6$ 1.0 | LiTFSI 0.1 | positive electrode | valve worked at 48 minutes |

[EXAMPLE 24]

Batteries were produced in the same manner as in Example 12. The fresh batteries which had not undergone charge/discharge cycling were subjected at 25°C to 5 cycles of initial charge/discharge in a voltage range of 4.1 to 3.0 V at a current value of 0.2 C (the value of current at which the rated capacity in terms of 1-hour-rate discharge capacity is discharged over 1 hour is referred to as 1 C; the same applies hereinafter).

Subsequently, an overcharge test was conducted also in a 25°C environment in the following manner, Ten batteries which had undergone the initial charge/discharge were serially connected to produce a battery module. One battery having a lower capacity than the other batteries was incorporated into the module to obtain a virtual defective battery module. The batteries in a fully charged state (open-circuit voltage of each battery, 4.1 V; supposed open-circuit voltage of the battery module, 41 V) were subjected to constant-current charge at a current value of 5 C, and the behavior thereof was examined. Although a voltage of 50 V was applied to the battery module, valve opening in the battery having a lower capacity was the only phenomenon which occurred.

[COMPARATIVE EXAMPLE 6]

An overcharge test was conducted in the same manner as in Example 24, except that use was made of batteries produced in the same manner as in Comparative Example 1. A voltage of 50 V was applied to the battery module, and the battery having a lower capacity exploded after valve opening.

[EXAMPLE 25]

Batteries were produced in the same manner as in Example 1, except that the solvent was replaced with a solvent prepared by mixing ethylene carbonate, ethyl methyl carbonate, and trifluoroethyl methyl carbonate (hereinafter referred to as TFEMC) in a volume ratio of 3/6/1. The batteries were subjected to the overcharge evaluation. The results thereof are shown in Table 3.

[EXAMPLE 26]

Batteries were produced in the same manner as in Example 1, except that the solvent was replaced with a solvent prepared by mixing ethylene carbonate, ethyl methyl carbonate, and ethyl trifluoroethyl carbonate (hereinafter referred to as ETFEC) in a volume ratio of 3/6/1. The batteries were subjected to the overcharge evaluation. The results thereof are shown in Table 3.

[EXAMPLE 27]

Batteries were produced in the same manner as in Example 1, except that use was made of the electrolytic solution obtained in Example 25 and the separator obtained in Example 2. The batteries were subjected to the overcharge test. The results thereof are shown in Table 3.

[EXAMPLE 28]

Batteries were produced in the same manner as in Example 1, except that use was made of the electrolytic solution obtained in Example 26 and the separator obtained in Example 2. The batteries were subjected to the overcharge test. The results thereof are shown in Table 3.

[EXAMPLE 29]

Batteries were produced in the same manner as in Example 25, except that the electroconductive layer of the separator obtained in Example 2 was made to face the negative electrode. The batteries were subjected to the overcharge test. The results thereof are shown in Table 3.

[EXAMPLE 30]

Batteries were produced in the same manner as in Example 4, except that use was made of the electrolytic solution obtained in Example 25. The batteries were subjected to the overcharge test. The results thereof are shown in Table 3.

[EXAMPLE 31]

Batteries were produced in the same manner as in Example 1, except that use was made of the electrolytic solution obtained in Example 25 and the separator obtained in Example 5. The batteries were subjected to the overcharge test. The results thereof are shown in Table 3.

[EXAMPLE 32]

Batteries were produced in the same manner as in Example 1, except that use was made of the electrolytic solution obtained in Example 26 and the separator obtained in Example 5. The batteries were subjected to the overcharge test. The results thereof are shown in Table 3.

[EXAMPLE 33]

Batteries were produced in the same manner as in Example 1, except that use was made of the electrolytic solution obtained in Example 25 and the separator obtained in Example 6, The batteries were subjected to the overcharge test. The results thereof are shown in Table 3.

[EXAMPLE 34]

Batteries were produced in the same manner as in Example 1, except that use was made of the electrolytic solution obtained in Example 26 and the separator obtained in Example 6. The batteries were subjected to the overcharge test. The results thereof are shown in Table 3.

[EXAMPLE 35]

Batteries were produced in the same manner as in Example 5, except that the solvent was replaced with a solvent prepared by mixing ethylene carbonate, ethyl methyl carbonate, and cis-4,5-difluoro-4,5-dimethylethylene carbonate (hereinafter referred to as A3t) in a volume ratio of 2/7/1. The batteries were subjected to the overcharge evaluation. The results thereof are shown in Table 3.

[EXAMPLE 36]

Batteries were produced in the same manner as in Example 5, except that the solvent was replaced with a solvent prepared by mixing ethylene carbonate, ethyl methyl carbonate, and cis-4,5-difluoroethylene carbonate (hereinafter referred to as c-DFEC) in a volume ratio of 2/7/1. The batteries were subjected to the overcharge evaluation. The results thereof are shown in Table 3.

[EXAMPLE 37]

Batteries were produced in the same manner as in Example 5, except that the solvent was replaced with a solvent prepared by mixing ethylene carbonate, ethyl methyl carbonate, and trans-4,5-difluoroethylene carbonate (hereinafter referred to as t-DFEC) in a volume ratio of 2/7/1. The batteries were subjected to the overcharge evaluation, The results thereof are shown in Table 3.

[Table 3]

| | Separator | | | | | | | Puncture strength [g] | Porosity (%) | Electrolytic solution | | Electro-conductive layer surface faces: | Results of overcharge test |
| | Electroconductive layer | | | | | | | | | Solvent composition (volume ratio) | Li salt 1 (mol/L) | | |
| | Method of formation | Conductive material | Thickness [nm] | Surface electrical resistance $(\Omega)$ | Surface resistivity $(\Omega/\square)$ | Apparent volume resistivity $\Omega\cdot cm$ | Volume resistivity $\Omega\cdot cm$ | | | | | | |
| Example 25 | sputtering | Al | 25 | 26 | $1.10\times10^2$ | $2.75\times10^{-4}$ | $2.5\times10^{-6}$ | 350 | 39 | EC/EMC/ TFENC =3/6/1 | LiPF$_6$ 1.0 | positive electrode | valve worked at 53 minutes |
| Example 26 | sputtering | Al | 25 | 26 | $1.10\times10^2$ | $2.75\times10^{-4}$ | $2.5\times10^{-6}$ | 350 | 39 | EC/EMC/ ETFEC =3/6/1 | LiPF$_6$ 1.0 | positive electrode | valve worked at 53 minutes |
| Example 27 | sputtering | Mo | 147 | 11 | $4.66\times10^1$ | $6.85\times10^{-4}$ | $5.0\times10^{-6}$ | 310 | 38 | EC/DIC/ TFEMC =3/6/1 | LiPF$_6$ 1.0 | positive electrode | valve worked at 55 minutes |
| Example 28 | sputtering | Mo | 147 | 11 | $4.66\times10^1$ | $6.85\times10^{-4}$ | $5.0\times10^{-6}$ | 310 | 38 | EC/EMC/ ETFEC =3/6/1 | LiPF$_6$ 1.0 | positive electrode | valve worked at 55 minutes |
| Example 29 | sputtering | Mo | 147 | 11 | $4.66\times10^1$ | $6.85\times10^{-4}$ | $5.0\times10^{-6}$ | 310 | 38 | EC/EMC/ TFEMC =3/6/1 | LiPF$_6$ 1.0 | negative electrode | valve worked at 54 minutes |
| Example 30 | sputtering | Mo | 147/147 | 11/11 | $4.66\times10^1/$ $4.66\times10^1$ | $6.85\times10^{-4}/$ $6.85\times10^{-4}$ | $5.0\times10^{-6}/$ $5.0\times10^{-6}$ | 280 | 36 | EC/EMC/ TFEMC =3/6/1 | LiPF$_6$ 1.0 | positive electrode/ negative electrode | valve worked at 55 minutes |
| Example 31 | vapor deposition | graphite | 5 | $2\times10^7$ | $2.10\times10^1$ | 10.5 | $1.38\times10^{-3}$ | 350 | 39 | EC/EHC/ TFEMC =3/6/1 | LiPF$_6$ 1.0 | positive electrode | valve worked at 47 minutes |
| Example 32 | vapor deposition | graphite | 5 | $2\times10^7$ | $2.10\times10^7$ | 10.5 | $1.38\times10^{-3}$ | 350 | 39 | EC/EMC/ ETFEC =3/6/1 | LiPF$_6$ 1.0 | positive electrode | valve worked at 47 minutes |

| | Separator | | | | | | | Puncture strength [g] | Porosity (%) | Electrolytic solution | | Electro-conductive layer surface faces: | Results of overcharge test |
|---|---|---|---|---|---|---|---|---|---|---|---|---|---|
| | Electroconductive layer | | | | | | | | | Solvent composition (volume ratio) | Li salt 1 (mol/L) | | |
| | Method of formation | Conductive material | Thickness [nm] | Surface electrical resistance ($\Omega$) | Surface resistivity ($\Omega/\square$) | Apparent volume resistivity $\Omega\cdot$cm | Volume resistivity $\Omega\cdot$cm | | | | | | |
| Example 33 | coating of slurry | acetylene black | $4.5\times10^3$ | 664 | $2.81\times10^3$ | 1.27 | 0.14 | 380 | 39 | EC/EMC/ TFEMC =3/6/1 | LiPF$_6$ 1.0 | positive electrode | valve worked at 50 minutes |
| Example 34 | coating of slurry | acetylene black | $4.5\times10^3$ | 664 | $2.81\times10^3$ | 1.27 | 0.14 | 380 | 39 | EC/EKC/ ETFEC =3/6/1 | LiPF$_6$ 1.0 | positive electrode | valve worked at 50 minutes |
| Example 35 | vapor deposition | graphite | 5 | $2\times10^1$ | $2.10\times10^7$ | 10.5 | $1.38\times10^{-3}$ | 350 | 39 | EC/EMC/A3t =2/7/1 | LiPF$_6$ 1.0 | positive electrode | valve worked at 46 minutes |
| Example 36 | vapor deposition | graphite | 5 | $2\times10^7$ | $2.10\times10^7$ | 10.5 | $1.38\times10^{-3}$ | 350 | 39 | EC/EMC/C-DFE C =2/7/1 | LiPF$_6$ 1.0 | positive electrode | valve worked at 46 minutes |
| Example 37 | vapor deposition | graphite | 5 | $2\times10^7$ | $2.10\times10^7$ | 10.5 | $1.38\times10^{-3}$ | 350 | 39 | EC/EKC/t-DFE C =2/7/1 | LiPF$_6$ 1.0 | positive electrode | valve worked at 46 minutes |

[EXAMPLE 38]

Batteries were produced in the same manner as in Example 25. The fresh batteries which had not undergone charge/discharge cycling were subjected at 25°C to 5 cycles of initial charge/discharge in a voltage range of 4.1 to 3.0 V at a current value of 0.2 C (the value of current at which the rated capacity in terms of 1-hour-rate discharge capacity is discharged over 1 hour is referred to as 1 C; the same applies hereinafter).

Subsequently, an overcharge test was conducted also in a 25°C environment in the following manner. Ten batteries which had undergone the initial charge/discharge were serially connected to produce a battery module. One battery having a lower capacity than the other batteries was incorporated into the module to obtain a virtual defective battery module. The batteries in a fully charged state (open-circuit voltage of each battery, 4.1 V; supposed open-circuit voltage of the battery module, 41 V) were subjected to constant-current charge at a current value of 5 C, and the behavior thereof was examined. Although a voltage of 50 V was applied to the battery module, valve opening in the battery having a lower capacity was the only phenomenon which occurred.

[EXAMPLE 39]

A slurry was prepared by evenly dispersing 6.6 parts by weight of acetylene black "Denka Black HS-100", manufactured by Denki Kagaku Kogyo K.K., 1.3 parts by weight of poly(vinyl alcohol) (average degree of polymerization, 1,700; degree of saponification, 99% or higher), 23.4 parts by weight of alumina particles (particle diameter, 0.2 $\mu$m; aspect ratio, 1.1), and 68.7 parts by weight of water. A commercial three-layer separator (polypropylene/polyethylene/polypropylene) having a thickness of 25 $\mu$m, puncture strength of 380 g, and porosity of 39% was used as a base, and the slurry was applied to one surface of the base and then dried at 60°C to form a heat-resistant electroconductive layer having a thickness of 4.8 $\mu$m. This electroconductive layer had a surface electrical resistance of $1.7 \times 10^4$ $\Omega$. This separator had a puncture strength of 380 g, porosity of 39%, and meltdown temperature of 190°C. A battery was produced in the same manner as in Example 1, except that the separator produced above was used, and this battery was subjected to the overcharge evaluation. The results thereof are shown in Table 4.

[EXAMPLE 40]

Poly(m-phenyleneisophthalamide) was dissolved in N,N-dimethylacetamide to produce a solution having a concentration of 10% by weight as a spinning solution. The same commercial three-layer separator as in Example 1 was used as a base and fixed to the surface of a collector, and a layer of nanofibers of poly(m-phenyleneisaphthalamide) was formed thereon by electrospinning under the conditions of a voltage of 17 kV, a distance to the collector of 20 cm, and an inner diameter of the nozzle of 0.59 mm. The layer of nanofibers was formed on each surface of the separator in a thickness of 2 $\mu$m for each surface. Subsequently, 15 parts by weight of acetylene black "Denka Black HS-100", manufactured by Denki Kagaku Kogyo K.K., 2.7 parts by weight of poly(vinyl alcohol) (average degree of polymerization, 1,700; degree of saponification, 99% or higher), and 82.3 parts by weight of water were evenly dispersed to prepare a slurry. This slurry was applied to one surface of the separator on which layers of poly(m-phenyleneisophthalamide) nanofibers had been formed as described above, and then dried at 60°C to form an electroconductive layer having a thickness of 4 $\mu$m. This electroconductive layer had a surface electrical resistance of 712 $\Omega$. This separator had a puncture strength of 380 g, porosity of 41%, and meltdown temperature of 220°C. A battery was produced in the same manner as in Example 1, except that the separator obtained was used. This battery was subjected to the overcharge test. The results thereof are shown in Table 4.

[EXAMPLE 41]

Composition 1: a mixture of, 80% by weight poly-4-methylpentene-1 and 20% by weight paraffin wax
Composition 2: a mixture of 30% by weight ultrahigh-molecular PE having a molecular weight of 1,000,000 and 70% by weight paraffin wax

The mixture according to composition 1 and the mixture according to composition 2 were subjected to melt kneading and sheet formation to produce a multilayer sheet having a configuration of composition 1/composition 2/composition 1, a thickness ratio of 2/6/2, and a thickness of 200 $\mu$m. Subsequently, a biaxially stretching machine was used to biaxially stretch the multilayer sheet at a temperature of 130°C and a stretch ratio of 4×4. The four edges of the stretched sheet were fixed, and the sheet in this state was then immersed for 30 minutes in 2-propanol having a temperature of 60°C to extract the paraffin wax. Thereafter, the sheet was dried at 60°C to remove the 2-propanol and obtain a porous film. This film had a thickness of 20 μm, puncture strength of 400 g, porosity of 50%, and meltdown temperature of 230°C. One surface of this film was subjected to aluminum sputtering to form an electroconductive layer. This aluminum layer had a thickness of 30 nm and a surface electrical resistance of 20 Ω. The separator on which the aluminum layer had been formed had a puncture strength of 360 g, porosity of 50%, and meltdown, temperature of 230°C. A battery was produced in the same manner as in Example 1, except that the separator obtained was used, and this battery was subjected to the overcharge test. The results thereof are shown in Table 4.

[COMPARATIVE EXAMPLE 7]

A slurry was prepared by evenly dispersing 1.3 parts by weight of poly(vinyl alcohol) (average degree of polymerisation, 1,700; degree of saponification, 99% or higher), 25.1 parts by weight, of alumina particles (particle diameter, 0.2 μm; aspect ratio, 1.1), and 73.6 parts by weight of water. A commercial three-layer separator (polypropylene/ polyethylene/polypropylene) having a thickness of 25 μm, puncture strength of 380 g, and porosity of 39% was used as a base, and the slurry was applied to one surface of the base and then dried at 60°C to form a heat-resistant layer having a thickness of 3.9 μm. This separator had a puncture strength of 380 g, porosity of 39%, and meltdown, temperature of 188°C. A battery was produced in the same manner as in Example 1, except that the separator produced above was used, and this battery was subjected to the overcharge evaluation. The results thereof are shown in Table 4.

[COMPARATIVE EXAMPLE 8]

Poly(m-phenyleneisophthalamide) was dissolved in N,N-dimethylacetamide to produce a solution having a concentration of 10% by weight as a spinning solution. The same commercial three-layer separator as in Example 1 was used as a base and fixed to the surface of a collector, and a layer of nanofibers of poly(m-phenyleneisophthalamide) was formed thereon by electrospinning under the conditions of a voltage of 17 kV, a distance to the collector of 20 cm, and an inner diameter of the nozzle of 0.59 mm. The layer of nanofibers was formed on each surface of the separator in a thickness of 2 μm for each surface. The separator obtained had a puncture strength of 380 g, porosity of 41%, and meltdown temperature of 220°C. A battery was produced in the same manner as in Example 1, except that this separator was used. This battery was subjected to the overcharge test. The results thereof are shown in Table 4.

[EXAMPLE 42]

Batteries were produced in the same manner as in Example 39. The fresh batteries which had not undergone charge/discharge cycling were subjected at 25°C to 5 cycles of initial charge/discharge in a voltage range of 4.1 to 3.0 V at a current value of 0.2 C (the value of current at which the rated capacity in terms of 1-hour-rate discharge capacity is discharged over 1 hour is referred to as 1 C; the same applies hereinafter).
Subsequently, an overcharge test was conducted also in a 25°C environment in the following manner. Ten batteries which had undergone the initial charge/discharge were serially connected to produce a battery module. One battery having a lower capacity than the other batteries was incorporated into the module to obtain a virtual defective battery module. The batteries in a fully charged state (open-circuit voltage of each battery, 4.1 V; supposed open-circuit voltage of the battery module, 41 V) were subjected to constant-current charge at a current value of 5 C, and the behavior thereof was examined. Although a voltage of 50 V was applied to the battery module, valve opening in the battery having a lower capacity was the only phenomenon which occurred.

[COMPARATIVE EXAMPLE 9]

An overcharge test was conducted in the same manner as in Example 42, except that use was made of batteries produced in the same manner as in Comparative Example 7. A voltage of 50 V was applied to the battery module, and the battery halving a lower capacity exploded after valve opening.
[Table 4]

| | Separator | | | | | | | Heat-resistant material | Puncture strength (g) | Porosity (%) | Melt-down temperature (°C) | Electrolytic solution | | Electro-conductive layer surface faces: | Results of overcharge test |
|---|---|---|---|---|---|---|---|---|---|---|---|---|---|---|---|
| | Electroconductive layer | | | | | | | | | | | Solvent composition (volume ratio) | Li salt 1 (mol /L) | | |
| | Method of formation | Conductive material | Thickness (nm) | Surface electrical resistance ($\Omega$) | Surface resistivity ($\Omega/\square$) | Apparent volume resistivity $\Omega\cdot$cm | Volume resistivity $\Omega\cdot$cm | | | | | | | | |
| Example 39 | coating of slurry | acetylene black | $4.8 \times 10^3$ | $1.7 \times 10^4$ | $7.20 \times 10^1$ | $3.24 \times 10^1$ | 0.14 | alumina | 380 | 39 | 190 | EC/EMC =3/7 | LiPF$_6$ 1.0 | positive electrode | valve worked at 50 minutes |
| Example 40 | coating of slurry | acetylene black | $4.0 \times 10^3$ | 712 | $3.02 \times 10^3$ | 1.21 | 0.14 | poly(m-phenylene-isophthalamide) | 380 | 41 | 220 | EC/EMC =3/7 | LiPF$_6$ 1.0 | positive electrode | valve worked at 52 minutes |
| Example 41 | sputtering | Al | 30 | 20 | $8.47 \times 10^1$ | $2.54 \times 10^{-4}$ | $2.5 \times 10^{-5}$ | poly-(4-methyl-pentene-1) | 360 | 50 | 230 | EC/EMC =3/7 | LiPF$_6$ 1.0 | positive electrode | valve worked at 58 minutes |
| Comparative Example 7 | Coating of slurry | - | - | - | - | - | - | alumina | 380 | 39 | 188 | EC/EMC =3/7 | LiPF$_6$ 1.0 | positive electrode | exploded at 42 minutes |
| Comparative Example 8 | coating of slurry | - | - | - | - | - | - | poly-(m-phenylene-isophthalamide) | 380 | 41 | 220 | EC/EMC =3/7 | LiPF$_6$ 1.0 | positive electrode | exploded at 42 minutes |

It is apparent from the results of the Examples that a nonaqueous-electrolyte secondary battery which is highly safe and can be prevented from short-circuiting or exploding, even when coming into an overcharged state in which a voltage of several tens of volts is applied thereto, is provided according to the invention.

While the invention has been described in detail and with reference to specific embodiments thereof, it will be apparent to one skilled in the art that various changes and modifications can be made therein without departing from the spirit and scope thereof. This application is based on a Japanese patent application filed on August 19, 2009 (Application No. 2009-190272), the contents thereof being herein incorporated by reference.

Industrial Applicability

According to the invention, a nonaqueous-electrolyte secondary battery is provided in which the separator has a specific electroconductive layer and which therefore is so safe that even when a battery module includes a defective cell and comes into an overcharged state in which a voltage of several tens of volts for the whole battery module is applied to one or a small number of single cells, this module can be prevented from short-circuiting or exploding.

**Claims**

1. A separator for use in a nonaqueous-electrolyte secondary battery, comprising a positive electrode and a negative electrode which are capable of occluding and releasing lithium, a separator, and a nonaqueous electrolytic solution comprising a nonaqueous solvent and an electrolyte,
   the separator having an electroconductive layer, the electroconductive layer having an apparent volume resistivity of $1{\times}10^{-4}$ $\Omega{\cdot}$cm to $1{\times}10^{6}$ $\Omega{\cdot}$cm and a film thickness less than 5 $\mu$m.

2. A separator for use in a nonaqueous-electrolyte secondary battery, comprising a positive electrode and a negative electrode which are capable of occluding and releasing lithium, a separator, and a nonaqueous electrolytic solution comprising a nonaqueous solvent and an electrolyte,
   the separator having an electroconductive layer, the electroconductive layer having a volume resistivity of $1{\times}10^{-6}$ $\Omega{\cdot}$cm to $1{\times}10^{6}$ $\Omega{\cdot}$cm and a film thickness less than 5 $\mu$m,

3. A separator for use in a nonaqueous-electrolyte secondary battery, comprising a positive electrode and a negative electrode which are capable of occluding and releasing lithium, a separator, and a nonaqueous electrolytic solution comprising a nonaqueous solvent and an electrolyte,
   the separator having an electroconductive layer, the electroconductive layer having a surface electrical resistance of $1{\times}10^{-2}$ $\Omega$ to $1{\times}10^{9}$ $\Omega$ and a film thickness less than 5 $\mu$m.

4. The separator for a nonaqueous-electrolyte secondary battery according to any one of claims 1 to 3, which has a meltdown temperature of 170°C or higher.

5. The separator for a nonaqueous-electrolyte secondary battery according to any one of claims 1 to 4, which has a puncture strength of 250 g to 800 g.

6. The separator for a nonaqueous-electrolyte secondary battery according to any one of claims 1 to 5, which has the electroconductive layer is formed on at least one of the surfaces of the separator.

7. The separator for a nonaqueous-electrolyte secondary battery according to any one of claims 1 to 6, wherein the electroconductive layer comprises at least one of metallic element and carbonaceous material.

8. The separator for a nonaqueous-electrolyte secondary battery according to claim 7, wherein the metallic element is at least one of member selected from the group consisting of aluminum, molybdenum, copper, and titanium.

9. The separator for a nonaqueous-electrolyte secondary battery according to claim 7, wherein the carbonaceous material is at least one of member selected from the group consisting of graphites, carbon blacks, and fine particles of amorphous carbon.

10. The separator for a nonaqueous-electrolyte secondary battery according to any one of claims 1 to 9, which has a heat-resistant layer, the heat-resistant layer comprising a resin which has a melting point or glass transition, temperature of 170°C of higher.

11. The separator for a nonaqueous-electrolyte secondary battery according to claim 10, wherein the heat-resistant layer contains an inorganic filler.

12. The separator for a nonaqueous-electrolyte secondary battery according to claim 10 or 11, wherein the heat-resistant layer comprises at least one of resin selected from the group consisting of polymethylpentene, polyamides, polyimides, and polyamide-imides.

13. The separator for a nonaqueous-electrolyte secondary battery according to claim 11, wherein the inorganic filler is at least one of member selected from the group consisting of aluminum oxide, magnesium oxide, titanium oxide, and barium sulfate.

14. A nonaqueous-electrolyte secondary battery comprising a positive electrode and a negative electrode which are capable of occluding and releasing lithium, a separator, and a nonaqueous electrolytic solution comprising a nonaqueous solvent and an electrolyte, wherein the separator is the separator for a nonaqueous-electrolyte secondary battery according to any one of claims 1 to 13.

15. The nonaqueous-electrolyte secondary battery according to claim 14, wherein the positive electrode contains a Ni-Mn-Co alloy.

16. The nonaqueous-electrolyte secondary battery according to claim 14 or 15, wherein the nonaqueous electrolytic solution contains a fluorinated carbonate.

17. The nonaqueous-electrolyte secondary battery according to claim 16, wherein the fluorinated carbonate is represented by the general formula $C=O(OR^1)(OR^2)$ wherein $R^1$ and $R^2$ each are an alkyl group having one or two carbon atoms, and at least one of $R^1$ and $R^2$ has one or more fluorine atoms.

18. The nonaqueous-electrolyte secondary battery according to claim 16, wherein the fluorinated carbonate is a fluorinated carbonate formed by replacing one or two of the hydrogen atoms contained as components in ethylene carbonate with at least one of a fluorine atom and a fluorinated alkyl group.

19. The nonaqueous-clectrolyte secondary battery according to any one of claims 16 to 18, wherein the content of the fluorinated carbonate is 20% or less in terms of proportion by volume in the electrolytic solution.

20. The nonaqueous-electrolyte secondary battery according to any one of claims 14 to 19, wherein the electrolyte comprises $LiPF_6$ and the concentration thereof in the electrolytic solution is 0.5 mol/L to 2 mol/L.

21. The nonaqueous-electrolyte secondary battery according to any one of claims 14 to 20, wherein the nonaqueous electrolytic solution further contains, as an auxiliary electrolyte, at least one of compound selected from the group consisting of lithium borates, lithium phosphates, lithium fluorophosphates, lithium carboxylates, lithium sulfonates, imide lithium salts, lithium oxalatoborates, lithium oxalatophosphates, and lithium methide salts, the concentration of all auxiliary electrolytes in the electrolytic solution being 0.01 mol/L to 0.3 mol/L.

22. The nonaqueous-electrolyte secondary battery according to claim 21, wherein the auxiliary electrolyte is at least one of compound selected from the group consisting of lithium tetrafluoroborate, bis(fluorosulfonyl)imide, and lithium bis(trifluorosulfonyl)imide lithium.

23. A nonaqueous-electrolyte secondary-battery module which comprises five or more nonaqueous-electrolyte secondary batteries serially connected together, the batteries each being the nonaqueous-electrolyte secondary battery according to any one of claims 14 to 22, in which a voltage of 20 V or higher is required for fully charging the module.

<table>
<tr><td colspan="2" align="center"><strong>INTERNATIONAL SEARCH REPORT</strong></td><td>International application No.<br>PCT/JP2010/063941</td></tr>
</table>

A.  CLASSIFICATION OF SUBJECT MATTER
*H01M2/16*(2006.01)i, *H01M10/0566*(2010.01)i

According to International Patent Classification (IPC) or to both national classification and IPC

B.  FIELDS SEARCHED

Minimum documentation searched (classification system followed by classification symbols)
H01M2/16, H01M10/0566

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>A | JP 2005-196999 A  (Kakogawa Plastics Co., Ltd.),<br>21 July 2005 (21.07.2005),<br>paragraphs [0004] to [0016], [0029] to [0032],<br>[0041] to [0042]; fig. 1, 3<br>(Family: none) | 1-3,14<br>9 |
| X<br>Y | JP 8-180853 A  (Mitsubishi Cable Industries,<br>Ltd.),<br>12 July 1996 (12.07.1996),<br>paragraphs [0013] to [0017], [0020], [0030],<br>[0041]<br>(Family: none) | 1-3,14<br>4-13,15-23 |

| | | |
|---|---|---|
| ☒  Further documents are listed in the continuation of Box C. | | ☐  See patent family annex. |

| | |
|---|---|
| * Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| | |
|---|---|
| Date of the actual completion of the international search<br>16 November, 2010 (16.11.10) | Date of mailing of the international search report<br>30 November, 2010 (30.11.10) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2010/063941 |

C (Continuation).    DOCUMENTS CONSIDERED TO BE RELEVANT

| Category* | Citation of document, with indication, where appropriate, of the relevant passages | Relevant to claim No. |
|---|---|---|
| X<br>Y | JP 10-270005 A  (Japan Storage Battery Co., Ltd.),<br>09 October 1998 (09.10.1998),<br>paragraphs [0003], [0009], [0012] to [0014];<br>fig. 1<br>(Family: none) | 1-3,14<br>4-13,15-23 |
| Y | JP 2007-305447 A  (GS Yuasa Corp.),<br>22 November 2007 (22.11.2007),<br>paragraphs [0026], [0040] to [0050], [0052],<br>[0066]<br>(Family: none) | 4-13,15-23 |
| Y | JP 2007-335294 A  (Nissan Motor Co., Ltd.),<br>27 December 2007 (27.12.2007),<br>paragraphs [0082] to [0083], [0108] to [0109]<br>(Family: none) | 4-13,15-23 |
| Y | JP 2005-142047 A  (Matsushita Electric Industrial Co., Ltd.),<br>02 June 2005 (02.06.2005),<br>paragraphs [0014] to [0016]<br>& EP 1530248 A2<br>paragraphs [0026] to [0035] | 4-13,15-23 |
| A | JP 5-21069 A  (Sanyo Electric Co., Ltd.),<br>29 January 1993 (29.01.1993),<br>paragraphs [0011] to [0015], [0019], [0027] to [0028]<br>(Family: none) | 1-3,14 |

Form PCT/ISA/210 (continuation of second sheet) (July 2009)

<table>
<tr><td align="center">**INTERNATIONAL SEARCH REPORT**</td><td>International application No.<br>PCT/JP2010/063941</td></tr>
</table>

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
   See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (July 2009)

**INTERNATIONAL SEARCH REPORT**

International application No.

PCT/JP2010/063941

Continuation of Box No.III of continuation of first sheet(2)

In order that a group of inventions set forth in claims comply with the requirement of unity, it is required that a special technical feature for so linking the group of inventions as to form a single general inventive concept is present, but the inventions set forth in claims 1 - 23 are considered to be linked by only the matter set forth in claim 1.

However, since the above-said matter is described in the prior art documents, for example, JP 2005-196999 A (Kakogawa Plastics Co., Ltd.), 21 July 2005 (21.07.2005), [0004] - [0016], [0029] - [0032], [0041] - [0042], [fig. 1], [fig. 3], etc., it is obvious said matter cannot be a special technical feature.

Consequently, among a group of inventions set forth in claims 1 - 23, there is no special technical feature for so linking the inventions as to form a single general inventive concept, and therefore, the group of inventions set forth in claims 1 - 23 does not comply with the requirement of unity of invention.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003297423 A
- JP 10154499 A
- JP 2005317551 A
- JP 4145087 B
- JP 2006269358 A
- JP 2008084866 A
- JP 5021069 A
- JP 11213980 A
- JP 11016566 A
- JP 2008192504 A

- JP 2005038722 A
- JP 2008257988 A
- JP 2009163939 A
- JP 2010010078 A
- JP 2004241339 A
- JP 2002260728 A
- JP 10021960 A
- JP 2004273152 A
- JP 2009190272 A

### Non-patent literature cited in the description

- Richiumu Ion Niji Denchi. The Nikkan Kogyo Shimbun, Ltd, 27 January 2000, 174
- Kagaku Binran Kiso-hen. Maruzene Co., Ltd, 20 February 2004, 611

- Saishin Tainetsu-Sei Kōbunshi. Sogo Gijutsu Center K.K, 01 May 1987, 6
- Saishin Richiumu Jon Niji Denchi. Johokiko Co., Ltd, 29 February 2008, 65